# EUROPEAN PATENT SPECIFICATION

(11) **EP 2 781 115 B1**
(45) Date of publication and mention of the grant of the patent: **16.03.2016**
(21) Application number: 12794838.8
(22) Date of filing: 15.11.2012
(51) Int. Cl.: H04W 72/04, H04L 29/06

(54) **ADJUSTING A BUNDLING FACTOR AND DE-JITTER BUFFER SIZE**
ANSPASSUNG DES BÜNDELUNGSFAKTORS UND DE-JITTER PUFFERSPEICHERS
AJUSTEMENTS DE FACTEUR GROUPAGE DE BLOCS ET D'UN TAMPON SUPPRESSEUR DE GIGUE

(30) Priority: 15.11.2011 US 201161560002 P; 09.11.2012 US 201213673686
(43) Date of publication of application: 24.09.2014
(73) Proprietor: Qualcomm Incorporated, San Diego, CA 92121 (US)
(72) Inventor: PALADUGU, Karthika, San Diego, California 92121 (US); ANCHAN, Kirankumar, San Diego, California 92121 (US); LIN, Yih-Hao, San Diego, California 92121 (US)
(74) Representative: Skrba, Sinéad
(86) International application number: PCT/US2012/065358
(87) International publication number: WO 2013/074841

(56) References cited:
- WO-A1-2007/048131
- WO-A1-2009/077852
- WO-A1-2009/099364
- US-A1- 2003 031 210
- US-A1- 2003 145 064

## Description

### BACKGROUND OF THE INVENTION

### 1. Field of the Invention

Embodiments of the invention relate to adjusting a bundling factor for a communication session based on whether a target access network supports header compression.

### 2. Description of the Related Art

Wireless communication systems have developed through various generations, including a first-generation analog wireless phone service (1G), a second-generation (2G) digital wireless phone service (including interim 2.5G and 2.75G networks) and a third-generation (3G) high speed data, Internet-capable wireless service. There are presently many different types of wireless communication systems in use, including Cellular and Personal Communications Service (PCS) systems. Examples of known cellular systems include the cellular Analog Advanced Mobile Phone System (AMPS), and digital cellular systems based on Code Division Multiple Access (CDMA), Long Term Evolution (LTE), Frequency Division Multiple Access (FDMA), Time Division Multiple Access (TDMA), the Global System for Mobile access (GSM) variation of TDMA, and newer hybrid digital communication systems using both TDMA and CDMA technologies.

WO 2007/048131 describes a server determining a bundling factor of a target user device based on properties, characteristics and operating conditions of a user device. Furthermore, it describes a user device determining a bundling factor according to its operating conditions.

WO 2009/077852 describes a UE configuring and modifying the de-jitter buffer according to an operator signalling and is dependent on maximum or expected delays.

US2003/031210 describes the modification of the de-jitter buffer dependent on the load, number of retransmissions, round trip time or acknowledgment.

WO2009/099364 describes the modification of the de-jitter buffer dependent on radio channel conditions.

### SUMMARY

In an embodiment, a user equipment (UE) determines to originate a communication session, and the UE further determines whether an access network serving the UE supports header compression. Based on the header compression determination, the UE establishes on a given bundling factor (BF). The UE transmits a first set of media packets to a server during the communication session, the first set of media packets each including a first number of media frames based on the given BF. The server determines target BF(s) for target UE(s) and determines whether to modify the given BF based on the target BF(s). Based on these determinations, the server transmits a second set of media packets either unmodified from the first stream of data packets, or modified based on the target BF(s). The target UE(s) receive the second stream of data packets and set a de-jitter buffer size based on the associated BF.

### BRIEF DESCRIPTION OF THE DRAWINGS

A more complete appreciation of embodiments of the invention and many of the attendant advantages thereof will be readily obtained as the same becomes better understood by reference to the following detailed description when considered in connection with the accompanying drawings which are presented solely for illustration and not limitation of the invention, and in which:
FIG. 1 is an illustration of a user equipment (UE) in accordance with at least one embodiment of the invention.
FIG. 2 illustrates a communication device that includes logic configured to perform functionality.
FIG. 3 illustrates a process of setting up a communication session between an originating UE and at least one target UE in accordance with an embodiment of the invention.
FIG. 4 illustrates a continuation of the process of FIG. 3 in accordance with an embodiment of the invention.
FIG. 5 illustrates a process of setting up a communication session between an originating UE served by a first radio access network, a first set of target UEs served by a second radio access network and a second set of target served by a third radio access network in accordance with an embodiment of the invention.
FIG. 6 illustrates a continuation of the process of FIG. 5 in accordance with an embodiment of the invention.
FIG. 7 illustrates a process of setting up a communication session between an originating UE and first and second sets of target UEs that are served by the same radio access network with different levels of performance in accordance with an embodiment of the invention.
FIG. 8 illustrates a continuation of the process of FIG. 5 in accordance with an embodiment of the invention.

### DETAILED DESCRIPTION

Aspects of the invention are disclosed in the following description and related drawings directed to specific embodiments of the invention. Alternate embodiments may be devised without departing from the scope of the invention. Additionally, well-known elements of the invention will not be described in detail or will be omitted so as not to obscure the relevant details of the invention.

The words "exemplary" and/or "example" are used herein to mean "serving as an example, instance, or illustration." Any embodiment described herein as "exemplary" and/or "example" is not necessarily to be construed as preferred or advantageous over other embodiments. Likewise, the term "embodiments of the invention" does not require that all embodiments of the invention include the discussed feature, advantage or mode of operation.

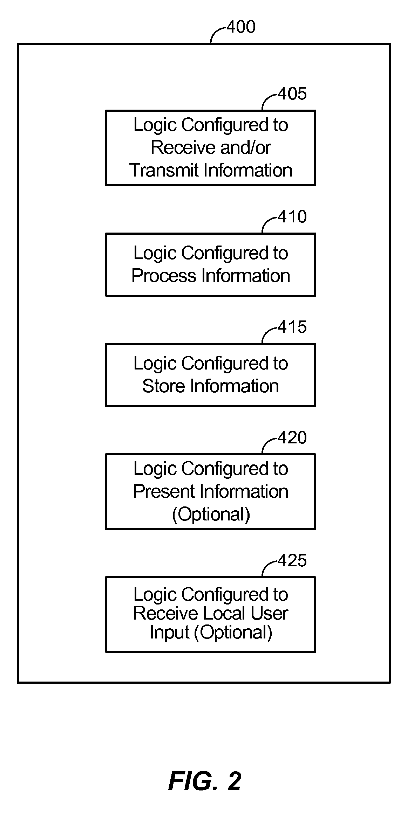

Further, many embodiments are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the embodiments described herein, the corresponding form of any such embodiments may be described herein as, for example, "logic configured to" perform the described action (e.g., described in more detail below with respect to FIG. 2).

A High Data Rate (HDR) subscriber station, referred to herein as user equipment (UE), may be mobile or stationary, and may communicate with one or more access points (APs), which may be referred to as Node Bs. A UE transmits and receives data packets through one or more of the Node Bs to a Radio Network Controller (RNC). The Node Bs and RNC are parts of a network called a radio access network (RAN). A radio access network can transport voice and data packets between multiple access terminals.

The radio access network may be further connected to additional networks outside the radio access network, such core network including specific carrier related servers and devices and connectivity to other networks such as a corporate intranet, the Internet, public switched telephone network (PSTN), a Serving General Packet Radio Services (GPRS) Support Node (SGSN), a Gateway GPRS Support Node (GGSN), and may transport voice and data packets between each UE and such networks. A UE that has established an active traffic channel connection with one or more Node Bs may be referred to as an active UE, and can be referred to as being in a traffic state. A UE that is in the process of establishing an active traffic channel (TCH) connection with one or more Node Bs can be referred to as being in a connection setup state. A UE may be any data device that communicates through a wireless channel or through a wired channel. A UE may further be any of a number of types of devices including but not limited to PC card, compact flash device, external or internal modem, or wireless or wireline phone. The communication link through which the UE sends signals to the Node B(s) is called an uplink channel (e.g., a reverse traffic channel, a control channel, an access channel, etc.). The communication link through which Node B(s) send signals to a UE is called a downlink channel (e.g., a paging channel, a control channel, a broadcast channel, a forward traffic channel, etc.). As used herein the term traffic channel (TCH) can refer to either an uplink/reverse or downlink/forward traffic channel.

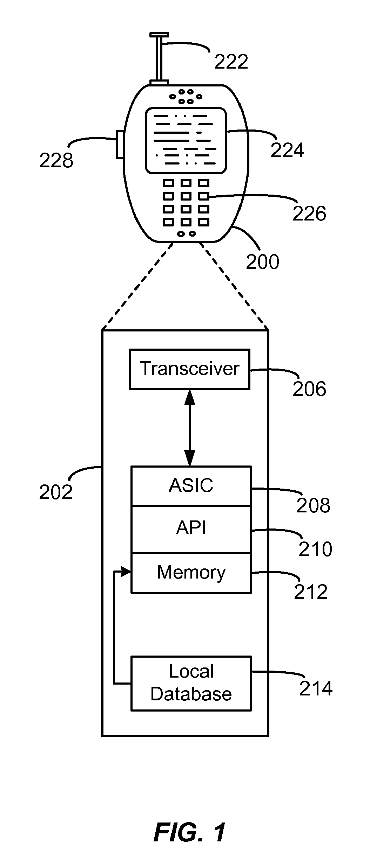

FIG. 1 illustrates a UE in accordance to an embodiment of the invention. Referring to FIG. 1, a UE 200, (here a wireless device), such as a cellular telephone, has a platform 202 that can receive and execute software applications, data and/or commands transmitted from an access network associated with a given radio access technology (e.g., long term evolution (LTE), EV-DO, wideband code division multiple access (W-CDMA), etc.) may ultimately come from a core network, the Internet and/or other remote servers and networks. The platform 202 can include a transceiver 206 operably coupled to an application specific integrated circuit ("ASIC" 208), or other processor, microprocessor, logic circuit, or other data processing device. The ASIC 208 or other processor executes the application programming interface ("API') 210 layer that interfaces with any resident programs in the memory 212 of the wireless device. The memory 212 can be comprised of read-only or random-access memory (RAM and ROM), EEPROM, flash cards, or any memory common to computer platforms. The platform 202 also can include a local database 214 that can hold applications not actively used in memory 212. The local database 214 is typically a flash memory cell, but can be any secondary storage device as known in the art, such as magnetic media, EEPROM, optical media, tape, soft or hard disk, or the like. The internal platform 202 components can also be operably coupled to external devices such as antenna 222, display 224, push-to-talk button 228 and keypad 226 among other components, as is known in the art.

Accordingly, an embodiment of the invention can include a UE including the ability to perform the functions described herein. As will be appreciated by those skilled in the art, the various logic elements can be embodied in discrete elements, software modules executed on a processor or any combination of software and hardware to achieve the functionality disclosed herein. For example, ASIC 208, memory 212, API 210 and local database 214 may all be used cooperatively to load, store and execute the various functions disclosed herein and thus the logic to perform these functions may be distributed over various elements. Alternatively, the functionality could be incorporated into one discrete component. Therefore, the features of the UE 200 in FIG. 1 are to be considered merely illustrative and the invention is not limited to the illustrated features or arrangement.

The wireless communication between the UE 200 and a serving access network can be based on different radio access technologies, such as LTE, CDMA, W-CDMA, time division multiple access (TDMA), frequency division multiple access (FDMA), Orthogonal Frequency Division Multiplexing (OFDM), the Global System for Mobile Communications (GSM), or other protocols that may be used in a wireless communications network or a data communications network. For example, in W-CDMA, the data communication is typically between UE 200, one or more Node B(s), and a radio network controller (RNC). The RNC can be connected to multiple data networks such as the core network, PSTN, the Internet, a virtual private network, a SGSN, a GGSN and the like, thus allowing UE 200 access to a broader communication network. As discussed in the foregoing and known in the art, voice transmission and/or data can be transmitted to the UEs from the RAN using a variety of networks and configurations. Accordingly, the illustrations provided herein are not intended to limit the embodiments of the invention and are merely to aid in the description of aspects of embodiments of the invention.

FIG. 2 illustrates a communication device 400 that includes logic configured to perform functionality. The communication device 400 can correspond to any of the above-noted communication devices, including but not limited to UE 200, or a network element (e.g., a server, a base station or Node B, a packet data network end-point (e.g., SGSN, GGSN, a Mobility Management Entity (MME) in Long Term Evolution (LTE), etc.), etc. Thus, communication device 400 can correspond to any electronic device that is configured to communicate with (or facilitate communication with) one or more other entities over a network.

Referring to FIG. 2, the communication device 400 includes logic configured to receive and/or transmit information 405. In an example, if the communication device 400 corresponds to a wireless communications device (e.g., UE 200, Node B or base station, etc.), the logic configured to receive and/or transmit information 405 can include a wireless communications interface (e.g., Bluetooth, WiFi, 2G, 3G, LTE, etc.) such as a wireless transceiver and associated hardware (e.g., an RF antenna, a MODEM, a modulator and/or demodulator, etc.). In another example, the logic configured to receive and/or transmit information 405 can correspond to a wired communications interface (e.g., a serial connection, a USB or Firewire connection, an Ethernet connection through which the Internet can be accessed, etc.). Thus, if the communication device 400 corresponds to some type of network-based server (e.g., SGSN, GGSN, an application server 170, etc.), the logic configured to receive and/or transmit information 405 can correspond to an Ethernet card, in an example, that connects the network-based server to other communication entities via an Ethernet protocol. In a further example, the logic configured to receive and/or transmit information 405 can include sensory or measurement hardware by which the communication device 400 can monitor its local environment (e.g., an accelerometer, a temperature sensor, a light sensor, an antenna for monitoring local RF signals, etc.). The logic configured to receive and/or transmit information 405 can also include software that, when executed, permits the associated hardware of the logic configured to receive and/or transmit information 405 to perform its reception and/or transmission function(s). However, the logic configured to receive and/or transmit information 405 does not correspond to software alone, and the logic configured to receive and/or transmit information 405 relies at least in part upon hardware to achieve its functionality.

Referring to FIG. 2, the communication device 400 further includes logic configured to process information 410. In an example, the logic configured to process information 410 can include at least a processor. Example implementations of the type of processing that can be performed by the logic configured to process information 410 includes but is not limited to performing determinations, establishing connections, making selections between different information options, performing evaluations related to data, interacting with sensors coupled to the communication device 400 to perform measurement operations, converting information from one format to another (e.g., between different protocols such as .wmv to .avi, etc.), and so on. For example, the processor included in the logic configured to process information 410 can correspond to a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The logic configured to process information 410 can also include software that, when executed, permits the associated hardware of the logic configured to process information 410 to perform its processing function(s). However, the logic configured to process information 410 does not correspond to software alone, and the logic configured to process information 410 relies at least in part upon hardware to achieve its functionality.

Referring to FIG. 2, the communication device 400 further includes logic configured to store information 415. In an example, the logic configured to store information 415 can include at least a non-transitory memory and associated hardware (e.g., a memory controller, etc.). For example, the non-transitory memory included in the logic configured to store information 415 can correspond to RAM memory, flash memory, ROM memory, EPROM memory, EEPROM memory, registers, hard disk, a removable disk, a CD-ROM, or any other form of storage medium known in the art. The logic configured to store information 415 can also include software that, when executed, permits the associated hardware of the logic configured to store information 415 to perform its storage function(s). However, the logic configured to store information 415 does not correspond to software alone, and the logic configured to store information 415 relies at least in part upon hardware to achieve its functionality.

Referring to FIG. 2, the communication device 400 further optionally includes logic configured to present information 420. In an example, the logic configured to display information 420 can include at least an output device and associated hardware. For example, the output device can include a video output device (e.g., a display screen, a port that can carry video information such as USB, HDMI, etc.), an audio output device (e.g., speakers, a port that can carry audio information such as a microphone jack, USB, HDMI, etc.), a vibration device and/or any other device by which information can be formatted for output or actually outputted by a user or operator of the communication device 400. For example, if the communication device 400 corresponds to UE 200 as shown in FIG. 1, the logic configured to present information 420 can include the display 224. In a further example, the logic configured to present information 420 can be omitted for certain communication devices, such as network communication devices that do not have a local user (e.g., network switches or routers, remote servers, etc.). The logic configured to present information 420 can also include software that, when executed, permits the associated hardware of the logic configured to present information 420 to perform its presentation function(s). However, the logic configured to present information 420 does not correspond to software alone, and the logic configured to present information 420 relies at least in part upon hardware to achieve its functionality.

Referring to FIG. 2, the communication device 400 further optionally includes logic configured to receive local user input 425. In an example, the logic configured to receive local user input 425 can include at least a user input device and associated hardware. For example, the user input device can include buttons, a touch-screen display, a keyboard, a camera, an audio input device (e.g., a microphone or a port that can carry audio information such as a microphone jack, etc.), and/or any other device by which information can be received from a user or operator of the communication device 400. For example, if the communication device 400 corresponds to UE 200 as shown in FIG. 1, the logic configured to receive local user input 425 can include the display 224 (if implemented a touch-screen), keypad 226, etc. In a further example, the logic configured to receive local user input 425 can be omitted for certain communication devices, such as network communication devices that do not have a local user (e.g., network switches or routers, remote servers, etc.). The logic configured to receive local user input 425 can also include software that, when executed, permits the associated hardware of the logic configured to receive local user input 425 to perform its input reception function(s). However, the logic configured to receive local user input 425 does not correspond to software alone, and the logic configured to receive local user input 425 relies at least in part upon hardware to achieve its functionality.

Referring to FIG. 2, while the configured logics of 405 through 425 are shown as separate or distinct blocks in FIG. 2, it will be appreciated that the hardware and/or software by which the respective configured logic performs its functionality can overlap in part. For example, any software used to facilitate the functionality of the configured logics of 405 through 425 can be stored in the non-transitory memory associated with the logic configured to store information 415, such that the configured logics of 405 through 425 each performs their functionality (i.e., in this case, software execution) based in part upon the operation of software stored by the logic configured to store information 405. Likewise, hardware that is directly associated with one of the configured logics can be borrowed or used by other configured logics from time to time. For example, the processor of the logic configured to process information 410 can format data into an appropriate format before being transmitted by the logic configured to receive and/or transmit information 405, such that the logic configured to receive and/or transmit information 405 performs its functionality (i.e., in this case, transmission of data) based in part upon the operation of hardware (i.e., the processor) associated with the logic configured to process information 410. Further, the configured logics or "logic configured to" of 405 through 425 are not limited to specific logic gates or elements, but generally refer to the ability to perform the functionality described herein (either via hardware or a combination of hardware and software). Thus, the configured logics or "logic configured to" of 405 through 425 are not necessarily implemented as logic gates or logic elements despite sharing the word "logic". Other interactions or cooperation between the configured logics 405 through 425 will become clear to one of ordinary skill in the art from a review of the embodiments described below in more detail.

Robust Header Compression (RoHC) corresponds to compression of headers of Internet packets, such as Internet Protocol (IP) Packets, User Datagram Protocol (UDP) packets, Real-time Transport Protocol (RTP) packets, Transmission Control Protocol (TCP) packets and so on. At a high-level, RoHC functions by replacing a relatively long portion of a packet header with a much shorter compressor (e.g., a few bytes long) when transmitting the compressed packet over a communication link. A receiving end of the communication link receives the compressed packet and re-generates the original packet header via a de-compressor (e.g., a previously established mapping or index table). Thus, while some set-up is involved to ensure proper de-compression over a particular communication link, less overhead data is required to be sent over the communication link if RoHC is supported.

UEs can connect to serving networks supported by different radio access technologies as noted above, such as W-CDMA, LTE, etc. Certain radio access technologies, such as Evolution -Data Optimized (EV-DO) networks and/or W-CDMA networks, do not commercially support RoHC. This means that while RoHC support can theoretically be used in EV-DO or W-CDMA networks, commercial implementations typically do not actually include such support. Accordingly, RTP, UDP, TCP and/or IP packets with full-sized headers are routed through typical EV-DO and/or W-CDMA networks. As will be appreciated, this increases the proportion of data traffic that is dedicated to overhead data. This overhead problem is mitigated somewhat through packet bundling, whereby multiple voice frames, for example, are bundled into a single packet with a single header so that fewer than N headers need to be allocated to N voice frames. However, bundling packets can degrade call conditions by increasing jitter (e.g., because each frame is received further apart due to the bundling), a media loss rate (e.g., because a single packet loss results in multiple lost frames) and mouth-to-ear delay (e.g., because the transmitting UE waits to collect multiple voice frames before bundling the multiple voice frames for transmission).

Networks operating in accordance with other radio access technologies, such as LTE, commercially support RoHC. In LTE, for example, RoHC without bundling is typically used to avoid the performance degradation issues associated with bundling while still achieving relatively high link efficiency due to the RoHC support.

For a typical Voice-over-IP (VoIP) session, media packets are conventionally transferred peer-to-peer without direct server arbitration. For other types of communication sessions, such as Push-to-Talk (PTT) sessions or Push-to-Transfer (PTX) sessions, the media for the communication session is mediated through a server, but the server typically only acts as an application-layer router for the flow of media.

Accordingly, it is difficult for communication sessions between UEs connected to radio networks associated with different radio access technologies (e.g., DO/W-CDMA and LTE, etc.) to achieve a bundling factor (BF) that is appropriate for each respective radio access technology. For example, a first UE connected to an LTE network may want to set-up a BF of 1 (e.g., bundle one voice frame per packet) because of its RoHC support, whereas a second UE connected to a DO/W-CDMA network may want to set-up a BF of 6 (e.g., bundle six voice frames per packet) because of its lack of RoHC support. In this example, each BF value that is desired for one of the radio networks is inappropriate for the other radio network(s).

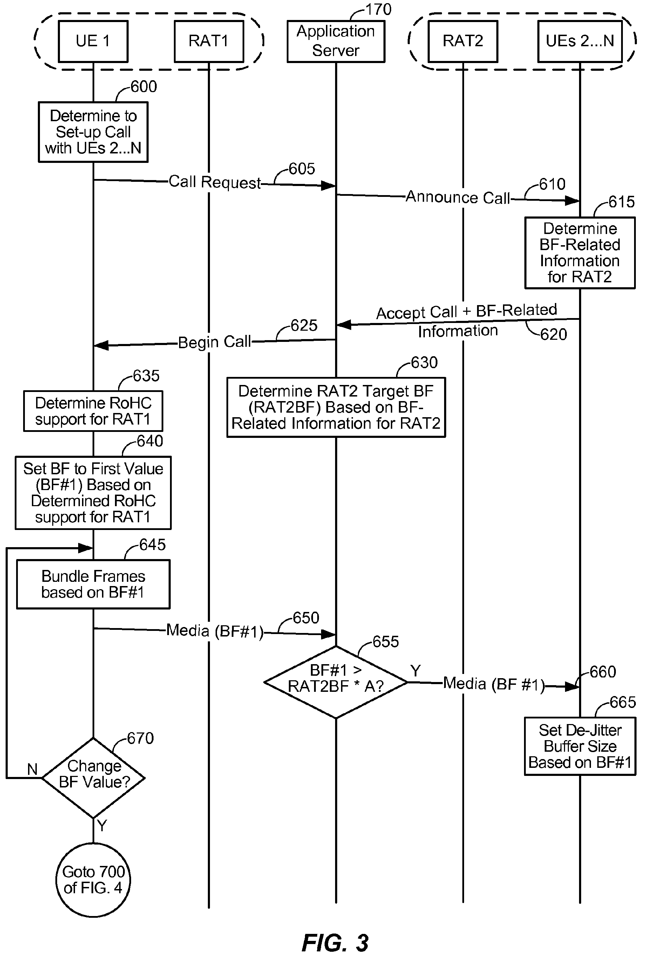

FIG. 3 illustrates a process of setting up a communication session between an originating UE (i.e., UE 1) and at least one target UE (i.e., UEs 2...N) in accordance with an embodiment of the invention. Referring to FIG. 3, an originating UE, or UE 1, determines to establish a communication session with UEs 2...N, 600, whereby N = 2 for a one-to-one or direct communication session and N > 2 for a group communication session. UE 1 transmits a call request to its current serving network ("RAT1") operating in accordance with a first radio access technology, and RAT1 forwards the call request to an application server 170 that is configured to arbitrate the communication session, 605. The application server 170 identifies the target UEs for the communication session (i.e., UEs 2...N), and announces the communication session to the target UEs 2...N over a network ("RAT2") operating in accordance with a second radio access technology, 610.

Referring to FIG. 3, RAT 1 and RAT 2 are used to denote the current serving networks of UE 1 and UEs 2...N, respectively. For example, RAT1 can correspond to a DO/W-CDMA network without RoHC support and RAT2 can correspond to an LTE network with RoHC support. Alternatively, RAT1 and RAT2 can both be associated with the same radio access technology (e.g., DO/W-CDMA, LTE, etc.). As noted above, in the event that RAT1 and RAT2 implement different radio access technologies, RAT1 and RAT2 may have different preferred or target BF values for exchanging data traffic over their respective networks to account for the support or non-support of header compression. Also, as will be discussed below in more detail, even if RAT1 and RAT2 use the same radio access technology, other factors can affect the preferred or target BF value for a particular network. In other words, the radio access technology by itself need not dictate the target BF value for the network.

Referring to FIG. 3, UEs 2...N determine BF-related information for RAT2, 615. In an example, the determination of 615 can correspond to a mere identification of RAT2's radio access technology (e.g., LTE, EV-DO, W-CDMA, etc.). In this case, the determination of 615 is similar to the determination of 635 at UE 1 (discussed below in more detail) in the sense that information sufficient to calculate a BF value is determined (e.g., so that the application server 170 can calculate the target BF value in 630, which is discussed below in more detail). In another example, the determination of 615 can include a determination of a specific target BF value for RAT2, such as BF = 1, BF = 6, etc. In this case, the determination of 615 is similar to the determinations of both 635 and 640 at UE 1 (discussed below in more detail) in the sense that an actual BF value is calculated at the UEs (e.g., instead of at the application server 170, so that 630 may correspond to a mere recognition of the reported BF value from the target UEs, discussed below in more detail). In any case, the BF-related information determined at 615 is sufficient for the application server 170 to determine a target BF value for packets delivered to UEs 2....N within RAT2.

UEs 2...N indicate their acceptance of the session announcement message and also the BF-related information determined at 615 to the application server 170, 620. In an example, the BF-related information can be included within an announce acknowledgment message from UEs 2...N that indicates the acceptance of the communication session by UEs 2...N. Alternatively, the BF-related information can be conveyed to the application server 170 via a registration message (e.g., which can be transmitted before the process of FIG. 3 even begins) that is independent of the announce acknowledgment message. Thus, the indication of call acceptance and the BF-related information may or may not be contained in the same message at 620.

In a further example, the BF-related information need not be conveyed in conjunction with call acceptance. For example, after the BF-related information is transmitted at 620 of FIG. 3, one or more of UEs 2...N may transmit supplemental BF-related information for RAT2 (or a portion of RAT2) at a later point during the communication session, which may prompt the application server 170 to update RAT2BF (or generate a different target BF altogether for the UE(s) reporting the supplemental BF-related information). For example, the supplemental BF-related information may notify the application server 170 of a new requested target BF for the UE(s), the supplemental BF-related information may notify the application server 170 of a transition or handoff of the UE(s) to a different RAT or to a different portion of the same RAT-network that is associated with a different level of performance (e.g., a different level of RoHC support), or any other type of information that may prompt the application server 170 to adjust RAT2BF for the reporting UE(s).

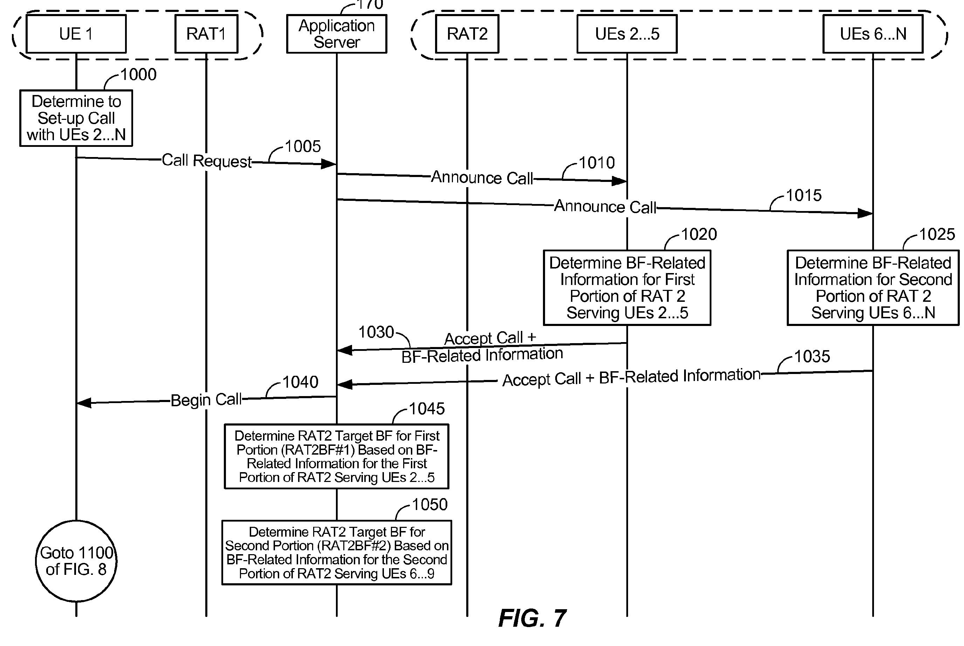

Referring to FIG. 3, after receiving a call acceptance indication from at least one of UEs 2...N, the application server 170 notifies UE 1 that the communication session can begin, 625. For example, in the case of a half-duplex communication session, the notification of 625 can correspond to a floor grant message. The application server 170 also evaluates the BF-related information associated with RAT2 to determine a target BF for packets delivered to UEs 2...N within RAT2 for UEs 2...N ("RAT2BF"), 630. For example, if the BF-related information indicates that RAT2 is an LTE network, then RAT2BF = 1. In another example, if the BF-related information indicates that RAT2 is a DO/W-CDMA network, then RAT2BF = 6. In another example, if the BF-related information indicates that RAT2 is an LTE roaming network that is not capable of implementing RoHC, then RAT2BF can be set to an intermediate value, such as 3. Accordingly, the radio access technology of RAT2 can affect, but is not necessarily determinative of, RAT2BF, and different BFs can be implemented for target UEs in the same radio technology or even the same network (e.g., see FIGS. 7-8 below).

In a further example, referring to 630 of FIG. 3, RAT2BF is not necessarily optimized specifically for each of UEs 2...N. For example, assume N = 12, and the BF-related information for UEs 2...6 indicates a lowest possible BF of 5, that the BF-related information for UEs 7...11 indicate a lowest possible BF of 6, and that the BF-related information for UE 12 indicate a lowest possible BF of 4. Instead of establishing target BFs specific to each target UE's lowest possible BF, the application server 170 can group at least some UEs with different lowest possible BFs together with a common BF that is compatible for each grouped UE. For example, a first UE with a lowest possible BF of 5 can accommodate a BF of 6 but a second UE with a lowest possible BF of 6 cannot accommodate a BF of 5, so the first and second UEs could obtain a common BF equal to 6. Thereby, if the application server 170 desires to conserve resources (or overhead), the application server 170 can implement a common BF for certain groupings of target UEs whereby the highest BF from among the lowest possible BFs of UEs to be grouped is selected as a common BF for the grouped UEs.

Referring to FIG. 3, UE 1 receives the call start notification from 625 and determines whether RoHC is supported by RAT1, 635. Based on whether RoHC is supported by RAT1, UE 1 sets the BF to a first value based on the RoHC support determination from 625. For example, UE 1 may determine that RAT1 corresponds to an LTE network such that RoHC is supported in 635, and can then set the first BF value to 1 in 640. In another example, UE 1 may determine that RAT1 corresponds to a DO/W-CDMA network such that RoHC is not supported in 635, and can then set the first BF value to 6 in 640. In another example, UE 1 may determine that RAT1 corresponds to an LTE network but may further determine that RAT1 is a roaming network that does not support RoHC, and can then set the first BF value to an intermediate value of 3 in 640. Conventionally, UE 1 would not evaluate RAT1 to figure out the BF value but would instead simply load a fixed, default BF value irrespective of the RoHC support capabilities of its current serving network.

In 645, UE 1 begins buffering media and bundling frames into packets in accordance with the first BF value from 640. UE 1 periodically transmits packets with frames bundled in accordance with the first BF value to the application server 170 over RAT1, 650. The application server 170 receives the media packets and determines the associated BF value of the received media packets, and then compares the determined BF value (i.e., the first BF value set by UE 1 at 640) with a number based upon RAT2BF, 655. In an embodiment, the number against which the application server 170 compares the determined BF value of the incoming media packets from UE 1 can correspond to either (i) RAT2BF itself, or (ii) an offset version of RAT2BF whereby RAT2BF is multiplied by an adjustment factor denoted as "A". In an example, the adjustment factor A satisfies the expression 0 ≤ A ≤1, and can be configured based on a tradeoff between re-bundling latency and packing efficiency. Accordingly, if the first BF value is only slightly lower than RAT2BF, the overhead associated with re-bundling packets at the application server 170 may cause the application server 170 to refrain from the re-bundling based on the adjustment factor A functioning to lower RAT2BF.

In the embodiment of FIG. 3, assume that the application server 170 determines that the first BF value is greater than RAT2BF and/or RAT2BF * A in 655. In this case, the application server 170 simply forwards the received media packets from UE 1 to UEs 2...N without any special re-bundling procedure, 660. Accordingly, the media packets transmitted by the application server 170 at 660 have the same BF value as the media packets transmitted by UE 1 to the application server 170 at 650, i.e., the first BF value that is set at 640. Upon receiving the media packets in accordance with the first BF value in 660, the target UEs 2...N set a de-jitter buffer size based on the first BF value, 665. Generally, a higher de-jitter buffer size is established for higher BF values.

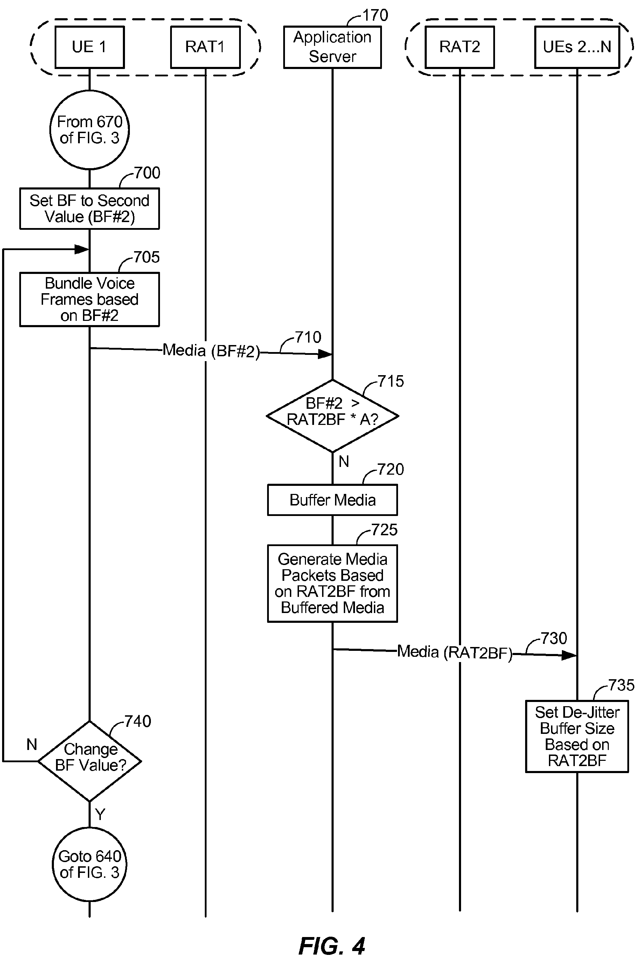

Turning back to UE 1, UE 1 continues to transmit media packets containing frames in accordance with the first BF value for a period of time during the communication session. In a periodic or event-driven manner during the communication session, UE 1 determines whether to change the current BF value, 670. For example, the determination of 670 can occur each time UE 1 hands off to a different network. In this case, UE 1 confirms whether or not its new network after the handoff is associated with the same radio access technology as its old network, and if not, determines to change its current BF value. In any case, if UE 1 determines not to change its BF value in 670, the process returns to 645 and UE 1 continues to bundle frames within media packets in accordance with the first BF value during the communication session. Otherwise, if UE 1 determines to change its BF value in 670, the process advances to 700 of FIG. 4. As will be discussed below in more detail with respect to 715 of FIG. 4, one or more UEs 2...N may also hand off to a different RAT, which can cause new BF-related information to be reported to the application server 170, which in turn can cause the application server 170 to update RAT2BF.

FIG. 4 illustrates a continuation of the process of FIG. 3 in accordance with an embodiment of the invention. Referring to FIG. 4, after determining to adjust its current BF value in 670 of FIG. 3, UE 1 sets the BF to a second value, 700. For example, assume that RAT1 was previously determined to correspond to DO/W-CDMA at 635 of FIG. 3 such that the first BF value was set to 6 at 640 of FIG. 3. Next, assume that UE 1 hands off to an LTE network, such that the serving network of UE 1, or RAT1, becomes LTE. In this case, the second BF value may be set to 1.

After establishing the second BF value at 700, UE 1 begins buffering media and bundling frames into packets in accordance with the second BF value, 705. UE 1 periodically transmits packets with frames bundled in accordance with the second BF value to the application server 170 over RAT1, 710. The application server 170 receives the media packets and determines the associated BF value of the received media packets (i.e., the second BF value), and then compares the determined BF value (i.e., the second BF value set by UE 1 at 700) to a number based upon RAT2BF, 715. In the embodiment of FIG. 4, it is assumed that, during 715 of FIG. 4, RAT2 has not changed for UEs 2...N from 615 of FIG. 3. Accordingly, except for being compared against the second BF value instead of the first BF value, the comparison that occurs at 715 is otherwise similar to 655 of FIG. 3 and as such will not be discussed further for the sake of brevity. However, it will be appreciated that if RAT2 had changed, such as if one or more of UEs 2...N hands off to a different network with a different radio access technology, then RAT2BF can also change based on a supplemental notification provided from one or more of UEs 2...N (not shown).

In the embodiment of FIG. 4, unlike 655 of FIG. 3, assume that the application server 170 determines that the second BF value is greater than RAT2BF and/or RAT2BF * A in 715. In this case, instead of simply forwarding the received media packets from UE 1 to UEs 2...N without any special re-bundling procedure, the application server 170 begins to buffer the incoming media packets and the media frames included within in a media buffer, 720. The application server 170 then generates its own media packets based on RAT2BF from the buffered media for transmission to UEs 2...N over RAT2, 725. For example, if the second BF value equals 1, then each incoming media packet from UE 1 includes one (1) media frame (e.g., voice frame). If RAT2BF equals 6, then the buffering step of 720 buffers at least six (6) media frames from six (6) media packets received from UE 1. Then, at 725, the application server 170 generates a bundled media packet that includes six (6) of the media frames. The application server 170 transmits a media packet in accordance with RAT2BF at 730. Upon receiving the media packets in accordance with RAT2BF at 730, the target UEs 2...N update their de-jitter buffer size based on RAT2BF, 735. As noted above, generally, a higher de-jitter buffer size is established for higher BF values. Thus, the application server 170's re-bundling of media frames to conform to RAT2BF instead of the second BF value causes a higher de-jitter buffer size to be implemented at UEs 2...N in the embodiment of FIG. 4.

Turning back to UE 1, UE 1 continues to transmit media packets containing frames in accordance with the second BF value for a period of time during the communication session, and the application server 170 continues to buffer and re-bundle the media frames from these packets in accordance with RAT2BF. In a periodic or event-driven manner during the communication session, UE 1 determines whether to change the current BF value, 740, similar to 670 of FIG. 3. If UE 1 determines not to change its BF value in 740, the process returns to 705 and UE 1 continues to bundle frames within media packets in accordance with the second BF value during the communication session. Otherwise, if UE 1 determines to change its BF value in 740 back to the first BF value, the process advances to 640 of FIG. 3, which is described above.

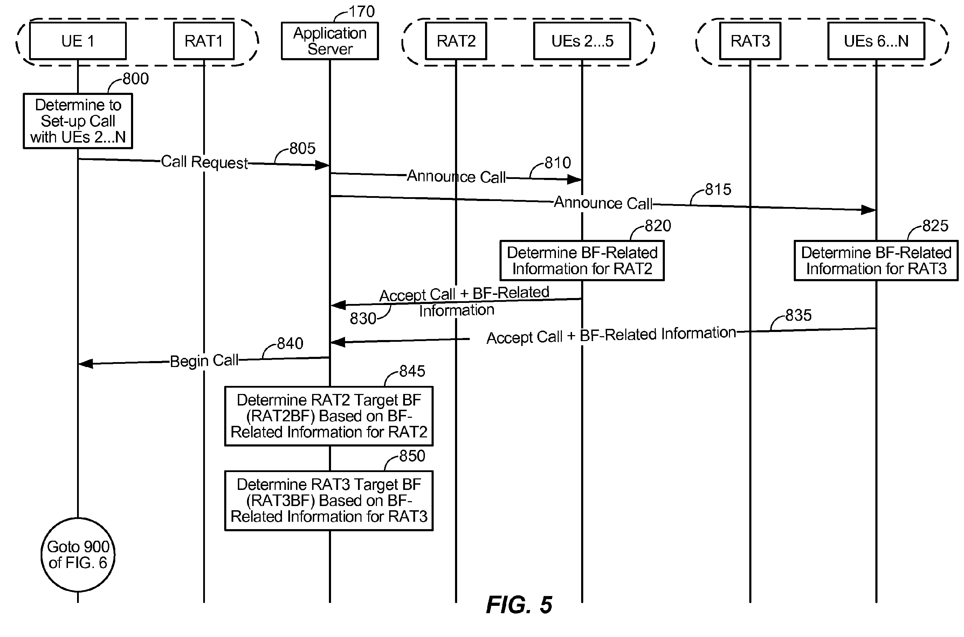

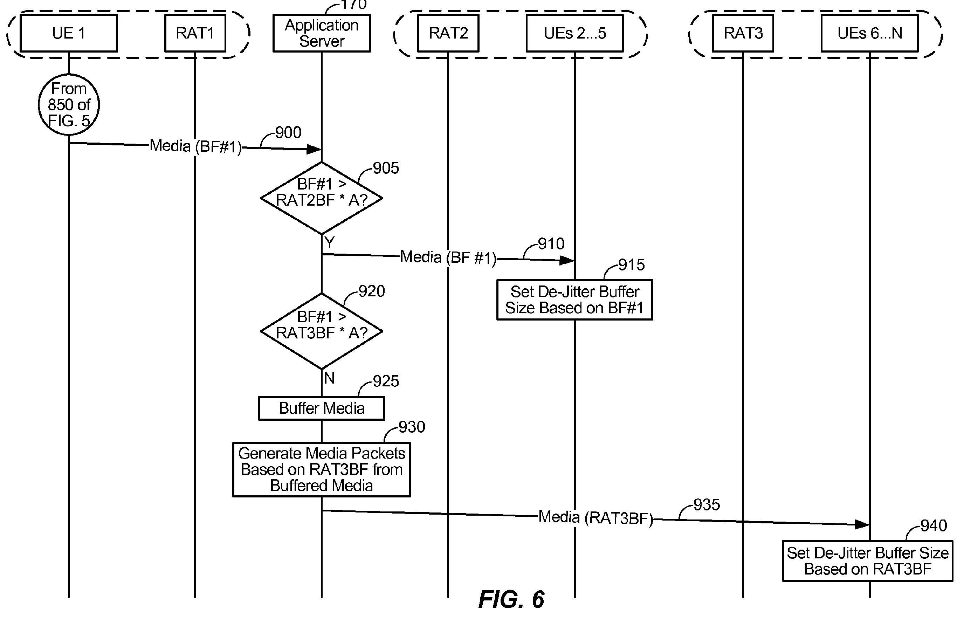

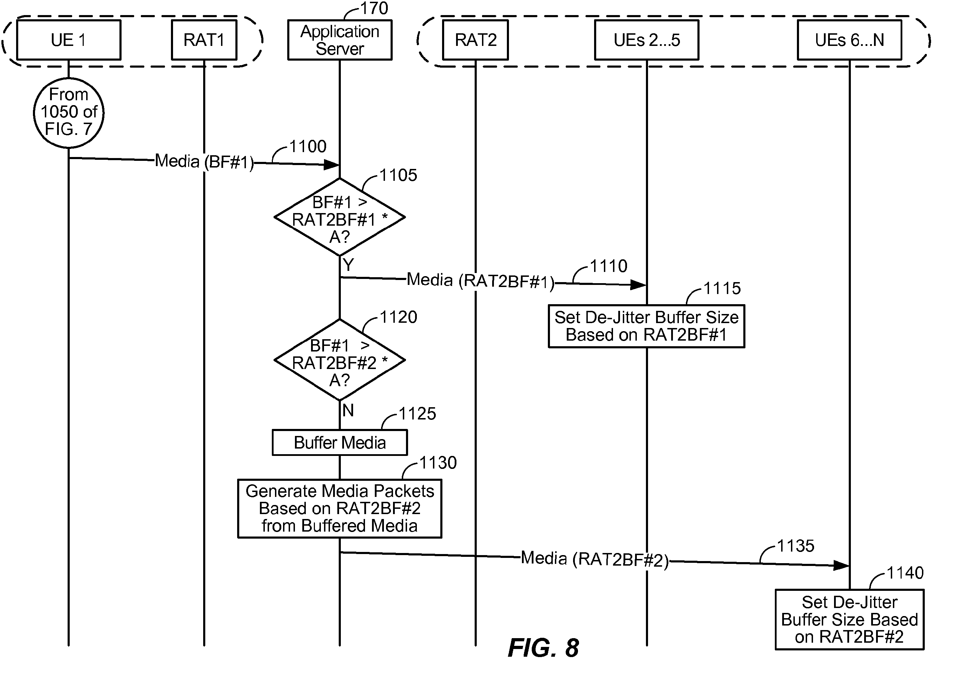

In the embodiments of FIGS. 3 and 4, UEs 2...N are described as each being served by the same access network RAT2. However, it is understood that group communication sessions can be bridged between an originating UE and a plurality of target UEs that are served by different access networks that are each associated with different radio access technologies and/or different RoHC parameters. Accordingly, FIGS. 5 and 6 illustrate a process of setting up a communication session between an originating UE (i.e., UE 1) served by a first radio access network RAT1, a first set of target UEs 2...5 served by a second radio access network RAT2 and a second set of target UEs 6...N served by a third radio access network RAT3 in accordance with an embodiment of the invention. In FIGS. 5 and 6, it is possible that RAT1 corresponds to the same network as RAT2 or RAT3 (although this is not necessarily the case), but RAT2 and RAT3 correspond to radio access networks that use different radio access technologies (e.g., LTE, DO/W-CDMA). Later, in FIGS. 7 and 8, an example implementation is described with respect to UEs operating via the same radio access technology associated with different levels of RoHC support (e.g., a home LTE network that supports RoHC, a roaming LTE network that does not support RoHC, etc.).

Referring to FIG. 5, an originating UE, or UE 1, determines to establish a communication session with UEs 2...N, 800, whereby N > 6. UE 1 transmits a call request to its current serving network ("RAT1") operating in accordance with a first radio access technology, and RAT1 forwards the call request to an application server 170 that is configured to arbitrate the communication session, 805. The application server 170 identifies the target UEs for the communication session (i.e., UEs 2...N) and determines that UEs 2...5 are served by a network ("RAT2") operating in accordance with a second radio access technology, and UEs 6...N are served by a network ("RAT3") operating in accordance with a third radio access technology. Again, either of the second or third radio access technologies associated with RAT2 or RAT3 can be the same as RAT1, but RAT2 and RAT3 are either associated with different radio access technologies, or with the same radio access technology with different levels of RoHC support. After identifying the locations of target UEs 2...N, the application server 170 announces the communication session to the target UEs 2...5 over RAT2, 810, and the application server 170 announces the communication session to the target UEs 6...N over RAT3, 815.

Referring to FIG. 5, UEs 2...5 determine BF-related information for RAT2, 820 (e.g., similar to 615 of FIG. 3), and UEs 6...N determine BF-related information for RAT3, 825. Similar to 615 of FIG. 3, in an example, the determinations of 820 and/or 825 can correspond to mere identifications of RAT2 or RAT3's radio access technology (e.g., LTE, EV-DO, W-CDMA, etc.). In another example, the determinations of 820 and/or 825 can include a determination of a specific target BF value for RAT2 and RAT3, respectively, such as BF = 1, BF = 6, etc. In any case, the BF-related information determined at 820 and 825 is sufficient for the application server 170 to determine target BF values for packets delivered to UEs 2....5 within RAT2 and UEs 6...N within RAT3, respectively.

UEs 2...N indicate their acceptance of the session announcement message and also the BF-related information determined at 820 and 825 to the application server 170, 830 and 835. In an example, the BF-related information can be included within announce acknowledgment messages from UEs 2...N that indicate their acceptance of the communication session by UEs 2...N. Alternatively, the BF-related information can be conveyed to the application server 170 via registration messages (e.g., which can be transmitted before the process of FIG. 5 even begins) that are independent of the announce acknowledgment messages. Thus, the respective indications of call acceptance and the BF-related information may or may not be contained in the same message at 820 and/or 825.

Referring to FIG. 5, after receiving a call acceptance indication from at least one of UEs 2...N, the application server 170 notifies UE 1 that the communication session can begin, 840. For example, in the case of a half-duplex communication session, the notification of 840 can correspond to a floor grant message. The application server 170 evaluates the BF-related information associated with RAT2 to determine a target BF for packets delivered to UEs 2...5 within RAT2 ("RAT2BF"), 845, and the application further evaluates the BF-related information associated with RAT3 to determine a target BF for packets delivered to UEs 6...N within RAT3 ("RAT3BF"), 850. In an example, assume that the BF-related information from UEs 2...5 indicates that RAT2 is a DO/W-CDMA network and that the BF-related information from UEs 6...N indicates that RAT3 is an LTE network. In this example, RAT2BF may be set to 6 and RAT3BF may be set to 1. In another example, if the BF-related information indicates that RAT2 or RAT3 is an LTE roaming network that is not capable of implementing RoHC, then RAT2BF or RAT3BF can be set to an intermediate value, such as 3. Accordingly, the radio access technology of RAT2 or RAT3 can affect, but is not necessarily determinative of, RAT2BF and RAT3BF. In a further example, 820, 830 and 845 and/or 825, 835 and/or 850 can repeat one or more times during the communication session (e.g., responsive to one or more of UEs 2...N handing off to a different RAT), which prompts the application server 170 to update the target BFs for the respective UE(s).

FIG. 6 illustrates a continuation of the process of FIG. 5 in accordance with an embodiment of the invention. Referring to FIG. 6, UE 1 periodically transmits packets with frames bundled in accordance with a first BF value to the application server 170 over RAT1, 900 (e.g., similar to 650 of FIG. 3). While not shown explicitly, the transmission of 900 may be the result of an execution of blocks 625 through 645 as shown in FIG. 3. These operations have been omitted from FIG. 6 for convenience of explanation.

Referring to FIG. 6, the application server 170 receives the media packets from UE 1 at 900 and determines the associated BF value of the received media packets, and then compares the determined BF value (i.e., the first BF value) with a number based upon RAT2BF, 905. The comparison of 905 is similar to the comparison that occurs at 655 of FIG. 3. Accordingly, in an embodiment, the number against which the application server 170 compares the determined BF value of the incoming media packets from UE 1 at 905 can correspond to either (i) RAT2BF itself, or (ii) an offset version of RAT2BF whereby RAT2BF is multiplied by an adjustment factor denoted as "A", as discussed above with respect to 655.

In the embodiment of FIG. 6, assume that the application server 170 determines that the first BF value is greater than RAT2BF and/or RAT2BF * A in 905. In this case, the application server 170 simply forwards the received media packets from UE 1 to UEs 2...5 without any special re-bundling procedure, 910. Accordingly, the media packets transmitted by the application server 170 at 910 have the same BF value as the media packets transmitted by UE 1 to the application server 170 at 900, i.e., the first BF value. Upon receiving the media packets in accordance with the first BF value in 910, the target UEs 2...5 set a de-jitter buffer size based on the first BF value, 915.

Still referring to FIG. 6, the application server 170 also compares the determined BF value (i.e., the first BF value) with another number that is based upon RAT3BF, 920. The comparison of 920 is similar to the comparison that occurs at 715 of FIG. 4. Accordingly, in an embodiment, the number against which the application server 170 compares the determined BF value of the incoming media packets from UE 1 at 915 can correspond to either (i) RAT3BF itself, or (ii) an offset version of RAT3BF whereby RAT3BF is multiplied by an adjustment factor denoted as "A". The adjustment factor A that is used to offset RAT3BF at 920 need not be the same as the adjustment factor A that is used to offset RAT2BF at 905, in an example.

In 920, unlike 905, assume that the application server 170 determines that the first BF value is greater than RAT3BF and/or RAT3BF * A. In this case, instead of simply forwarding the received media packets from UE 1 to UEs 6...N without any special re-bundling procedure, the application server 170 begins to buffer the incoming media packets and the media frames included within in a media buffer, 925. The application server 170 then generates its own media packets based on RAT3BF from the buffered media for transmission to UEs 6...N over RAT3, 930. For example, if the first BF value equals 1, then each incoming media packet from UE 1 includes one (1) media frame (e.g., voice frame). If RAT3BF equals 6, then the buffering step of 925 buffers at least six (6) media frames from six (6) media packets received from UE 1. Then, at 930, the application server 170 generates a bundled media packet that includes six (6) of the media frames. The application server 170 transmits a media packet in accordance with RAT3BF in 935. Upon receiving the media packets in accordance with RAT3BF in 935, the target UEs 6...N update their de-jitter buffer size based on RAT3BF, 940. As noted above, generally, a higher de-jitter buffer size is established for higher BF values. Thus, the application server 170's re-bundling of media frames to conform to RAT3BF instead of the first BF value causes a higher de-jitter buffer size to be implemented at UEs 6...N at 940 as compared to UEs 2...5 at 915 in the embodiment of FIG. 6.

Referring to FIG. 7, an originating UE, or UE 1, determines to establish a communication session with UEs 2...N, 1000, whereby N > 6. UE 1 transmits a call request to its current serving network ("RAT1") operating in accordance with a first radio access technology, and RAT1 forwards the call request to an application server 170 that is configured to arbitrate the communication session, 1005. The application server 170 identifies the target UEs for the communication session (i.e., UEs 2...N) and determines that UEs 2...N are served by a network ("RAT2") operating in accordance with a second radio access technology. The second radio access technology associated with RAT2 can be the same as RAT1. Further, RAT2 includes a first portion and a second portion that are associated with different levels of performance. For example, the first portion of RAT2 may support RoHC and the second portion of RAT2 may not support RoHC. After identifying the locations of target UEs 2...N, the application server 170 announces the communication session to the target UEs 2...N over RAT2 in the first and second portions, 1010 and 1015.

Referring to FIG. 7, UEs 2...5 determine BF-related information for the first portion of RAT2, 1020 (e.g., similar to 615 of FIG. 3), and UEs 6...N determine BF-related information for the second portion of RAT2, 1025. Similar to 615 of FIG. 3, in an example, the determinations of 1020 and/or 1025 can correspond to mere identifications of RAT2's radio access technology (e.g., LTE, EV-DO, W-CDMA, etc.). In another example, the determinations of 1020 and/or 1025 can include a determination of a specific target BF value for the first and second portions RAT2, respectively, such as BF = 1, BF = 6, etc. In any case, the BF-related information determined at 1020 and 1025 is sufficient for the application server 170 to determine target BF values for packets delivered to UEs 2....5 within the first portion of RAT2 and UEs 6...N within the second portion of RAT2, respectively.

UEs 2...N indicate their acceptance of the session announcement message and also the BF-related information determined at 1020 and 1025 to the application server 170, 1030 and 1035. In an example, the BF-related information can be included within announce acknowledgment messages from UEs 2...N that indicate their acceptance of the communication session by UEs 2...N. Alternatively, the BF-related information can be conveyed to the application server 170 via registration messages (e.g., which can be transmitted before the process of FIG. 7 even begins) that are independent of the announce acknowledgment messages. Thus, the respective indications of call acceptance and the BF-related information may or may not be contained in the same message at 1020 and/or 1025.

Referring to FIG. 7, after receiving a call acceptance indication from at least one of UEs 2...N, the application server 170 notifies UE 1 that the communication session can begin, 1040. For example, in the case of a half-duplex communication session, the notification of 1040 can correspond to a floor grant message. The application server 170 evaluates the BF-related information associated with the first portion of RAT2 to determine a target BF for packets delivered to UEs 2...5 within the first portion of RAT2 ("RAT2BF#1"), 1045, and the application further evaluates the BF-related information associated with the second portion of RAT2 to determine a target BF for packets delivered to UEs 6...N within the second portion of RAT2 ("RAT2BF#2"), 1050. In an example, assume that the BF-related information from UEs 2...5 indicates that the first portion of RAT2 does not support RoHC and that the BF-related information from UEs 6...N indicates that the second portion of RAT2 supports RoHC. In this example, RAT2BF#1 may be set to 6 and RAT2BF#2 may be set to 1. In another example, if the BF-related information indicates that the first or second portions of RAT2 is an LTE roaming network that is not capable of implementing RoHC, then RAT2BF#1 of RAT2BF#2 can be set to an intermediate value, such as 3. Accordingly, the radio access technology and the performance level (e.g., such as the RoHC support level) of the first and second portions of RAT2 can affect, but are not necessarily determinative of, RAT2BF#1 and RAT2BF#2. In a further example, 1020, 1030 and 1045 and/or 1025, 1035 and/or 1050 can repeat one or more times during the communication session (e.g., responsive to one or more of UEs 2...N handing off to a different RAT, transitioning into a different portion of the same RAT with a different RoHC support level, etc.), which prompts the application server 170 to update the target BFs to the respective UE(s).

FIG. 8 illustrates a continuation of the process of FIG. 7 in accordance with an embodiment of the invention. Referring to FIG. 8, UE 1 periodically transmits packets with frames bundled in accordance with a first BF value to the application server 170 over RAT1, 1100 (e.g., similar to 650 of FIG. 3). While not shown explicitly, the transmission of 1100 may be the result of an execution of blocks 625 through 645 as shown in FIG. 3. These operations have been omitted from FIG. 8 for convenience of explanation.

Referring to FIG. 8, the application server 170 receives the media packets from UE 1 at 1100 and determines the associated BF value of the received media packets, and then compares the determined BF value (i.e., the first BF value) with a number based upon RAT2BF#1, 1105. The comparison of 1105 is similar to the comparison that occurs at 655 of FIG. 3. Accordingly, in an embodiment, the number against which the application server 170 compares the determined BF value of the incoming media packets from UE 1 at 1105 can correspond to either (i) RAT2BF#1 itself, or (ii) an offset version of RAT2BF#1 whereby RAT2BF#1 is multiplied or otherwise modified by an adjustment factor denoted as "A", as discussed above with respect to 655 of FIG. 3.

In the embodiment of FIG. 8, assume that the application server 170 determines that the first BF value is greater than RAT2BF#1 and/or RAT2BF#1 * A in 1105. In this case, the application server 170 simply forwards the received media packets from UE 1 to UEs 2...5 within the first portion of RAT2 without any special re-bundling procedure, 1110. Accordingly, the media packets transmitted by the application server 170 at 1110 have the same BF value as the media packets transmitted by UE 1 to the application server 170 at 1100, i.e., the first BF value. Upon receiving the media packets in accordance with the first BF value in 1110, the target UEs 2...5 set a de-jitter buffer size based on the first BF value, 1115.

Still referring to FIG. 8, the application server 170 also compares the determined BF value (i.e., the first BF value) with another number that is based upon RAT2BF#2, 1120. The comparison of 1120 is similar to the comparison that occurs at 715 of FIG. 4. Accordingly, in an embodiment, the number against which the application server 170 compares the determined BF value of the incoming media packets from UE 1 at 1115 can correspond to either (i) RAT2BF#2 itself, or (ii) an offset version of RAT2BF#2 whereby RAT2BF#2 is multiplied by an adjustment factor denoted as "A". The adjustment factor A that is used to offset RAT2BF#2 at 1120 need not be the same as the adjustment factor A that is used to offset RAT2BF#1 at 1105, in an example.

In 1120, unlike 1105, assume that the application server 170 determines that the first BF value is greater than RAT2BF#2 and/or RAT2BF#2 * A. In this case, instead of simply forwarding the received media packets from UE 1 to UEs 6...N without any special re-bundling procedure, the application server 170 begins to buffer the incoming media packets and the media frames included within a media buffer, 1125. The application server 170 then generates its own media packets based on RAT2BF#2 from the buffered media for transmission to UEs 6...N over the second portion of RAT2, 1130. For example, if the first BF value equals 1, then each incoming media packet from UE 1 includes one (1) media frame (e.g., voice frame). If RAT2BF#2 equals 6, then the buffering step of 1125 buffers at least six (6) media frames from six (6) media packets received from UE 1. Then, at 1130, the application server 170 generates a bundled media packet that includes six (6) of the media frames. The application server 170 transmits a media packet in accordance with RAT2BF#2 at 1135. Upon receiving the media packets in accordance with RAT2BF#2 at 1135, the target UEs 6...N update their de-jitter buffer size based on RAT2BF#2, 1140. As noted above, generally, a higher de-jitter buffer size is established for higher BF values. Thus, the application server 170's re-bundling of media frames to conform to RAT2BF#2 instead of the first BF value causes a higher de-jitter buffer size to be implemented at UEs 6...N at 1140 as compared to UEs 2...5 at 1115 in the embodiment of FIG. 8.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences and/or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

While the foregoing disclosure shows illustrative embodiments of the invention, it should be noted that various changes and modifications could be made herein without departing from the scope of the invention as defined by the appended claims. The functions, steps and/or actions of the method claims in accordance with the embodiments of the invention described herein need not be performed in any particular order. Furthermore, although elements of the invention may be described or claimed in the singular, the plural is contemplated unless limitation to the singular is explicitly stated.

## Claims

1. A method of operating a server (170) configured to arbitrate a communication session between a plurality of user equipments, UEs, (200) comprising:
determining, (630) for at least one target UE (200) among the plurality of UEs (200), at least one target bundling factor, BF indicative of a target number of media frames per media packet transmitted to the at least one target UE (200), wherein the target BF is determined based whether header compression is supported at a current serving network of the at least one target UE (200) or at a subset of the current serving network to which the at least one target UE (200) is connected;
receiving, from a transmitting UE (200) among the plurality of UEs (200) during the communication session, a set of media packets that each include a given number of media frames for transmission to the at least one target UE, (200) the given number based on a given BF applied to the set of media packets;
determining whether to modify the given BF applied to the set of media packets based on the at least one target BF; and
transmitting the media frames from the set of media packets to the at least one target UE (200) based on the modification determination.

2. The method of claim 1, wherein the at least one target BF includes a common target BF that is compatible with a plurality of target UEs (200) and is used to determine whether to modify the given BF for each of the plurality of target UEs (200).

3. The method of claim 2, wherein determining the at least one target BF includes:
determining, for each of the plurality of target UEs (200), a lowest BF with which the target UE (200) is compatible; and
establishing the common target BF based on a highest BF of the determined lowest BFs.

4. The method of claim 2, wherein a common buffer is used by the server (170) to buffer packets for delivery to the plurality of target UEs (200) in accordance with the common target BF.

5. The method of claim 1, wherein the determining the at least one target BF step includes:
receiving BF-related information from the at least one target UE (200).

6. The method of claim 5, wherein the received BF-related information includes (i) an indication of the at least one target BF, (ii) an indication of whether header compression is supported at a current serving network of the at least one target UE (200) and/or (iii) an indication of whether header compression is supported at a subset of the current serving network to which the at least one target UE (200) is connected.

7. The method of claim 6, wherein the indication of whether header compression is supported at the current serving network corresponds to an indication of a type of the current serving network.

8. The method of claim 7, wherein the received BF-related information indicates that header compression is supported by indicating that the type of the current serving network is Long Term Evolution, LTE or wherein the received BF-related information indicates that header compression is not supported by indicating that the type of the current serving network is W-CDMA and/or EV-DO.

9. The method of claim 6, wherein the indication of whether header compression is supported at the subset of the current serving network corresponds to an indication of a subset-specific performance level of the subset of the current serving network.

10. The method of claim 1, wherein the determining at least one target BF step includes:
identifying a first BF indicative of an acceptable target number of media frames per media packet transmitted to one or more UEs (200) of the at least one target UE (200); and
reducing the first BF based on an adjustment factor to produce a second BF,
wherein the second BF corresponds to the at least one target BF for the one or more UEs (200).

11. The method of claim 9,
wherein the adjustment factor controls a degree to which the first BF is reduced,
wherein a higher reduction to the first BF improves re-bundling latency for the transmitted media frames and a lower reduction to the first BF improves packing efficiency for the transmitted media frame, and
wherein the adjustment factor is established as a tradeoff between the re-bundling latency and the packing efficiency.

12. The method of claim 1, wherein the determining whether to modify step includes:
comparing the given BF with at least one number based on the at least one target BF and
determining to modify the given BF if the comparison indicates that the given BF is not greater than the at least one number; and
determining not to modify the given BF if the comparison indicates that the given BF is greater than the at least one number.

13. The method of claim 12, wherein the at least one number corresponds to the at least one target BF or at least one offset version of the at least one target BF.

14. The method of claim 1, wherein the determining whether to modify step determines to modify the given BF, further comprising:
buffering the set of media packets at the server; (170) and
generating, based on the buffered set of media packets, a different set of media packets based on the at least one target BF,
wherein the transmitting step transmits the different set of media packets to the at least one target UE (200).

15. The method of claim 1,
wherein the at least one target UE (200) includes a first set of target UEs (200) and a second set of target UEs (200), and
wherein the determining at least one target BF step determines a first target BF for the first set of target UEs (200) and a second target BF for the second set of target UEs (200).

16. The method of claim 15, wherein the determining whether to modify determines to modify the given BF for the first set of target UEs (200) and determines not to modify the given BF for the second set of target UEs (200).

17. The method of claim 15, wherein the determining whether to modify includes:
comparing the given BF with a first number based on the first target BF and a second number based on the second target BF and
wherein the determining whether to modify step further includes:
determining to modify the given BF for the first set of target UEs (200) if the comparison indicates that the given BF is not greater than the first number;
determining not to modify the given BF for the first set of target UEs (200) if the comparison indicates that the given BF is greater than the first number
determining to modify the given BF for the second set of target UEs (200) if the comparison indicates that the given BF is not greater than the second number; and
determining not to modify the given BF for the second set of target UEs (200) if the comparison indicates that the given BF is greater than the first number

18. The method of claim 17, wherein the first and second numbers correspond to the first and second target BFs, respectively, or to first and second offset versions of the first and second target BFs, respectively.

19. The method of claim 1, further comprising:
receiving, from the transmitting UE (200), another set of media packets that each include another given number of media frames for transmission to the at least one target UE (200), the another given number based on another given BF applied to the another set of media packets,
wherein the determining whether to modify and the transmitting steps are repeated based on the another given BF.

20. The method of claim 19, wherein the receiving another set of media packets step occurs based on a transition of the transmitting UE (200) (i) to a different serving network with a different level of header compression support and/or performance, or (ii) to a different portion of a same serving network with a different level of header compression support and/or performance.

21. The method of claim 1, further comprising:
determining another at least one target BF for the at least one target UE (200); and
repeating the receiving, determining whether to modify and transmitting steps based on the determined another at least one target BF.

22. The method of claim 21, wherein the determining another at least one target BF is based upon a transition of the at least one target UE (200) (i) to a different serving network with a different level of header compression support and/or performance, or (ii) to a different portion of a same serving network with a different level of header compression support and/or performance.

23. A method of operating a user equipment, UE (200) participating in a communication session between a plurality of UEs, (200) comprising:
receiving, during the communication session, a first set of media packets that each include a first number of media frames, the first number based on a first bundling factor, BF applied to the first set of media packets;
setting a de-jitter buffer size of the UE (200) to a first level based on the first BF;
receiving, after setting the de-jitter buffer size of the UE (200) to the first level and during the communication session, a second set of media packets that each include a second number of media frames, the second number based on a second BF applied to the second set of media packets; and
transitioning the de-jitter buffer size of the UE (200) to a second level based on the second BF.

24. A method of operating a user equipment, UE, (200) comprising:
determining to originate a communication session to be arbitrated by a server (170) with at least one target UE (200);
determining whether an access network serving the UE (200) supports header compression;
establishing, based on the header compression support determination, a first bundling factor, BF indicative of a first number of media frames per media packet; and
transmitting a first set of media packets that each include the first number of media frames to the server (170) for transmission to the at least one target UE (200) during the communication session based on the first BF.

25. A server (170) configured to arbitrate a communication session between a plurality of user equipments, UEs, (200) comprising:
means for determining, for at least one target UE (200) among the plurality of UEs, (200) at least one target bundling factor, BF indicative of a target number of media frames per media packet transmitted to the at least one target UE (200), wherein the target BF is determined based whether header compression is supported at a current serving network of the at least one target UE (200) or at a subset of the current serving network to which the at least one target UE (200) is connected;
means for receiving, from a transmitting UE (200) among the plurality of UEs (200) during the communication session, a set of media packets that each include a given number of media frames for transmission to the at least one target UE (200), the given number based on a given BF applied to the set of media packets;
means for determining whether to modify the given BF applied to the set of media packets based on the at least one target BF; and
means for transmitting the media frames from the set of media packets to the at least one target UE (200) based on the modification determination.

26. A user equipment, UE (200) configured to participate in a communication session between a plurality of UEs, (200) comprising:
means for receiving, during the communication session, a first set of media packets that each include a first number of media frames, the first number based on a first bundling factor, BF applied to the first set of media packets;
means for setting a de-jitter buffer size of the UE (200) to a first level based on the first BF;
means for receiving, after setting the de-jitter buffer size of the UE (200) to the first level and during the communication session, a second set of media packets that each include a second number of media frames, the second number based on a second BF applied to the second set of media packets; and
means for transitioning the de-jitter buffer size of the UE (200) to a second level based on the second BF.

27. A user equipment, UE (200) configured to participate in a communication session between a plurality of UEs, (200) comprising:
means for determining to originate the communication session to be arbitrated by a server (170) with at least one target UE (200);
means for determining whether an access network serving the UE (200) supports header compression;
means for establishing, based on the header compression support determination, a first bundling factor, BF indicative of a first number of media frames per media packet; and
means for transmitting a first set of media packets that each include the first number of media frames to the server (170) for transmission to the at least one target UE (200) during the communication session based on the first BF.

28. A non-transitory computer-readable medium containing instructions stored thereon, which, when executed by a server (170) configured to arbitrate a communication session between a plurality of user equipments UEs, (200) cause the server to perform actions, the instructions comprising:
at least one instruction to determine, for at least one target UE (200) among the plurality of UEs (200), at least one target bundling factor BF indicative of a target number of media frames per media packet transmitted to the at least one target UE (200), wherein the target BF is determined based whether header compression is supported at a current serving network of the at least one target UE (200) or at a subset of the current serving network to which the at least one target UE (200) is connected;
at least one instruction to receive, from a transmitting UE (200) among the plurality of UEs (200) during the communication session, a set of media packets that each include a given number of media frames for transmission to the at least one target UE (200), the given number based on a given BF applied to the set of media packets;
at least one instruction to determine whether to modify the given BF applied to the set of media packets based on the at least one target BF; and
at least one instruction to transmit the media frames from the set of media packets to the at least one target UE (200) based on the modification determination.

29. A non-transitory computer-readable medium containing instructions stored thereon, which, when executed by a user equipment UE (200) configured to participate in a communication session between a plurality of UEs (200), cause the UE (200) to perform actions, the instructions comprising:
at least one instruction to receive, during the communication session, a first set of media packets that each include a first number of media frames, the first number based on a first bundling factor BF applied to the first set of media packets;
at least one instruction to set a de-jitter buffer size of the UE (200) to a first level based on the first BF;
at least one instruction to receive, after setting the de-jitter buffer size of the UE (200) to the first level and during the communication session, a second set of media packets that each include a second number of media frames, the second number based on a second BF applied to the second set of media packets; and
at least one instruction to transition the de-jitter buffer size of the UE (200) to a second level based on the second BF.

30. A non-transitory computer-readable medium containing instructions stored thereon, which, when executed by a user equipment UE (200) configured to participate in a communication session between a plurality of UEs, (200) cause the UE (200) to perform actions, the instructions comprising:
at least one instruction to determine to originate a communication session to be arbitrated by a server (170) with at least one target UE (200);
at least one instruction to determine whether an access network serving the UE (200) supports header compression;
at least one instruction to establish, based on the header compression support determination, a first bundling factor BF indicative of a first number of media frames per media packet; and
at least one instruction to transmit a first set of media packets that each include the first number of media frames to the server (170) for transmission to the at least one target UE (200) during the communication session based on the first BF.

## Patentansprüche

1. Ein Verfahren zum Betreiben eines Servers (170), der konfiguriert ist zum Vermitteln bzw. Aushandeln einer Kommunikationssitzung zwischen einer Vielzahl von Nutzereinrichtungen bzw. UEs (UE = user equipment) (200), das Folgendes aufweist:
Bestimmen (630), für wenigstens eine Ziel-UE (200) aus der Vielzahl von UEs (200), wenigstens eines Zielbündelungsfaktors bzw. Ziel-BF (BF = bundling factor), der eine Zielanzahl von Medienframes bzw. Medienrahmen pro Medienpaket anzeigt, das an die wenigstens eine Ziel-UE (200) gesendet bzw. übertragen wird, wobei der Ziel-BF bestimmt wird basierend darauf, ob Header-Komprimierung in einem aktuellen, versorgenden Netzwerk der wenigstens einen Ziel-UE (200) oder in einem Subsatz des aktuellen, versorgenden Netzwerkes, mit dem die wenigstens eine Ziel-UE (200) verbunden ist, unterstützt wird;
Empfangen, von einer sendenden bzw. übertragenden UE (200) der Vielzahl von UEs (200), während der Kommunikationssitzung, eines Satzes von Medienpaketen, die jeweils eine gegebene Anzahl von Medienrahmen für eine Sendung bzw. Übertragung an die wenigstens eine Ziel-UE (200) beinhalten, wobei die gegebene Anzahl auf einem gegebenen BF basiert, der auf den Satz von Medienpaketen angewandt wird;
Bestimmen, ob der gegebene BF modifiziert werden soll, der auf den Satz von Medienpaketen angewandt wird, basierend auf dem wenigstens einen Ziel-BF; und
Senden bzw. Übertragen der Medienrahmen aus dem Satz von Medienpaketen an die wenigstens eine Ziel-UE (200) basierend auf der Modifikationsbestimmung.

2. Verfahren nach Anspruch 1, wobei der wenigstens eine Ziel-BF einen gemeinsamen Ziel-BF beinhaltet, der mit einer Vielzahl von Ziel-UEs (200) kompatibel ist und verwendet wird zum Bestimmen, ob der gegebene BF für jede der Vielzahl von Ziel-UEs (200) modifiziert werden soll.

3. Verfahren nach Anspruch 2, wobei das Bestimmen des wenigstens einen Ziel-BF Folgendes beinhaltet:
Bestimmen, für jede der Vielzahl von Ziel-UEs (200), eines niedrigsten BF, mit dem die Ziel-UE (200) kompatibel ist; und
Einrichten des gemeinsamen Ziel-BF basierend auf einem höchsten BF der bestimmten niedrigsten BFs.

4. Verfahren nach Anspruch 2, wobei ein gemeinsamer Puffer durch den Server (170) verwendet wird zum Puffern von Paketen für eine Lieferung an die Vielzahl von Ziel-UEs (200) gemäß dem gemeinsamen Ziel-BF.

5. Verfahren nach Anspruch 1, wobei der Schritt des Bestimmens des wenigstens einen Ziel-BF Folgendes beinhaltet:
Empfangen von Information, die sich auf den BF bezieht, von der wenigstens einen Ziel-UE (200).

6. Verfahren nach Anspruch 5, wobei die empfangene Information, sie sich auf den BF bezieht, Folgendes beinhaltet (i) eine Anzeige des wenigstens einen Ziel-BF, (ii) eine Anzeige, ob Header-Komprimierung unterstützt wird in einem aktuellen, versorgenden Netzwerk der wenigstens einen Ziel-UE (200) und/oder (iii) eine Anzeige, ob Header-Komprimierung unterstützt wird in einem Subsatz des aktuellen, versorgenden Netzwerkes, mit dem die wenigstens eine Ziel-UE (200) verbunden ist.

7. Verfahren nach Anspruch 6, wobei die Anzeige, ob Header-Komprimierung in dem aktuellen, versorgenden Netzwerk unterstützt wird einer Anzeige eines Typs des aktuellen, versorgenden Netzwerks entspricht.

8. Verfahren nach Anspruch 7, wobei die empfangene Information, die sich auf den BF bezieht, anzeigt, dass Header-Komprimierung unterstützt wird durch Anzeigen, dass der Typ des aktuellen, versorgenden Netzwerkes LTE (LTE = Long Term Evolution) ist oder wobei die empfangene Information, die sich auf den BF bezieht, anzeigt, dass Header-Komprimierung nicht unterstützt wird durch Anzeigen, dass der Typ des aktuellen, versorgenden Netzwerkes W-CDMA und/oder EV-DO ist.

9. Verfahren nach Anspruch 6, wobei die Anzeige, ob Header-Komprimierung in dem Subsatz des aktuellen, versorgenden Netzwerkes unterstützt wird einer Anzeige eines subsatzspezifischen Performance-Levels des Subsatzes des aktuellen, versorgenden Netzwerkes entspricht.

10. Verfahren nach Anspruch 1, wobei der Schritt des Bestimmen wenigstens eines Ziel-BFs Folgendes beinhaltet:
Identifizieren eines ersten BF, der eine akzeptable Zielanzahl von Medienrahmen pro Medienpaket anzeigt, das an eine oder mehrere UEs (200) der wenigstens einen Ziel-UE (200) gesendet bzw. übertragen wird; und
Verringern des ersten BF basierend auf einem Einstellungs- bzw. Anpassungsfaktor zum Erzeugen eines zweiten BF,
wobei der zweite BF dem wenigstens einen Ziel-BF für die ein oder mehreren UEs (200) entspricht.

11. Verfahren nach Anspruch 9,
wobei der Einstellungs- bzw. Anpassungsfaktor einen Grad bzw. ein Ausmaß steuert, zu dem bzw. um das der erste BF verringert wird,
wobei eine höhere Reduktion des ersten BF eine Re-Bundling- bzw. Neubündelungslatenz für die gesendeten bzw. übertragenen Medienrahmen verbessert und eine geringere Reduktion des ersten BF die Packungseffizienz für den gesendeten bzw. übertragenen Medienrahmen verbessert, und
wobei der Einstellungs- bzw. Anpassungsfaktor als ein Tradeoff bzw. eine Abwägung zwischen der Neubündelungslatenz und der Packungseffizienz festgelegt wird.

12. Verfahren nach Anspruch 1, wobei der Schritt des Bestimmens, ob modifiziert werden soll, Folgendes beinhaltet:
Vergleichen des gegebenen BF mit wenigstens einer Zahl bzw. Anzahl basierend auf dem wenigstens einen Ziel-BF und
Bestimmen, dass der gegebene BF modifiziert werden soll, wenn der Vergleich anzeigt, dass der gegebene BF nicht größer ist als die wenigstens eine Zahl; und
Bestimmen, dass der gegebene BF nicht modifiziert werden soll, wenn der Vergleich anzeigt, dass der gegebene BF größer ist als die wenigstens eine Zahl.

13. Verfahren nach Anspruch 12, wobei die wenigstens einen Zahl dem wenigstens einen Ziel-BF entspricht oder wenigstens eine versetzte Version bzw. Offset-Version des wenigstens einen Ziel-BF ist.

14. Verfahren nach Anspruch 1, wobei der Schritt des Bestimmens, ob modifiziert werden soll, bestimmt, dass der gegebene BF modifiziert werden soll, und weiter Folgendes aufweist:
Puffern des Satzes von Medienpaketen an dem Server (170); und
Generieren, basierend auf dem gepufferten Satz von Medienpaketen, eines unterschiedlichen Satzes von Medienpaketen basierend auf dem wenigstens eine Ziel-BF,
wobei der Sende- bzw. Übertragungsschritt den unterschiedlichen Satz von Medienpaketen an die wenigstens eine Ziel-UE (200) sendet.

15. Verfahren nach Anspruch 1,
wobei die wenigstens eine Ziel-UE (200) einen ersten Satz von Ziel-UEs (200) und einen zweiten Satz von Ziel-UEs (200) beinhaltet; und
wobei der Schritt des Bestimmens wenigstens eines Ziel-BF einen ersten Ziel-BF für den ersten Satz von Ziel-UEs (200) bestimmt und einen zweiten Ziel-BF für den zweiten Satz von Ziel-UEs (200) bestimmt.

16. Verfahren nach Anspruch 15, wobei das Bestimmen, ob modifiziert werden soll, bestimmt, dass der gegebene BF für den ersten Satz von Ziel-UEs (200) modifiziert werden soll und bestimmt, dass der gegebene BF für den zweiten Satz von Ziel-UEs (200) nicht modifiziert werden soll.

17. Verfahren nach Anspruch 15, wobei das Bestimmen, ob modifiziert werden soll, Folgendes beinhaltet:
Vergleichen des gegebenen BF mit einer ersten Zahl, die auf dem ersten Ziel-BF basiert, und einer zweiten Zahl, die auf dem zweiten Ziel-BF basiert, und
wobei der Schritt des Bestimmens, ob modifiziert werden soll, weiter Folgendes beinhaltet:
Bestimmen, dass der gegebene BF für den ersten Satz von Ziel-UEs (200) modifiziert werden soll, wenn der Vergleich anzeigt, dass der gegebene BF nicht größer ist als die erste Zahl;
Bestimmen, dass der gegebene BF für den ersten Satz von Ziel-UEs (200) nicht modifiziert werden soll, wenn der Vergleich anzeigt, dass der gegebene BF größer ist als die erste Zahl;
Bestimmen, dass der gegebene BF für den zweiten Satz von Ziel-UEs (200) modifiziert werden soll, wenn der Vergleich anzeigt, dass der gegebene BF nicht größer ist als die zweite Zahl; und
Bestimmen, dass der gegebene BF für den zweiten Satz von Ziel-UEs (200) nicht modifiziert werden soll, wenn der Vergleich anzeigt, dass der gegebene BF größer ist als die erste Zahl.

18. Verfahren nach Anspruch 17, wobei die erste und zweite Zahl dem ersten bzw. zweiten Ziel-B entsprechen, oder der ersten und zweiten versetzten Version bzw. Offset-Version des ersten bzw. zweiten Ziel-BF.

19. Verfahren nach Anspruch 1, das weiter Folgendes aufweist:
Empfangen, von der sendenden bzw. übertragenden UE (200), eines weiteren Satzes von Medienpaketen die eine weitere gegebene Anzahl von Medienrahmen zur Sendung bzw. Übertragung an die wenigstens eine Ziel-UE (200) beinhalten,
wobei die weitere, gegebene Anzahl auf einem weiteren, gegebenen BF basiert, der auf den weiteren Satz von Medienpaketen angewandt wird,
wobei die Schritte des Bestimmens, ob modifiziert werden soll und des Sendens basierend auf dem weiteren, gegebenen BF wiederholt werden.

20. Verfahren nach Anspruch 19, wobei der Schritt des Empfangens eines weiteren Satzes von Medienpaketen auftritt basierend auf einem Übergang der sendenden UE (200)
(i) zu einem anderen, versorgenden Netzwerk mit einem anderen Level einer Header-Komprimierungsunterstützung und/oder -performance, oder
(ii) auf einen anderen Teil desselben versorgenden Netzwerkes mit einem anderer Level einer Header-Komprimierungsunterstützung und/oder - performance.

21. Verfahren nach Anspruch 1, das weiter Folgendes aufweist:
Bestimmen eines weiteren wenigstens einen Ziel-BFs für die wenigstens eine Ziel-UE (200); und
Wiederholen der Schritte des Empfangens, des Bestimmens, ob modifiziert werden soll, und des Sendens basierend auf dem bestimmten weiteren wenigstens einen Ziel-BF.

22. Verfahren nach Anspruch 21, wobei das Bestimmen, ob wenigstens ein weiterer Ziel-BF bestimmt werden soll basiert auf einem Übergang der wenigstens einen Ziel-UE (200) (i) zu einem anderen versorgenden Netzwerk mit einem anderen Level einer Header-Komprimierungsunterstützung und/oder -performance, oder (ii) zu einem anderen Teil desselben, versorgenden Netzwerkes mit einem anderen Level einer Header-Komprimierungsunterstützung und/oder -performance.

23. Ein Verfahren zum Betreiben einer Nutzereinrichtung bzw. UE (UE = user equipment) (200), die an einer Kommunikationssitzung zwischen einer Vielzahl von UEs (200) teilnimmt, das Folgendes aufweist:
Empfangen, während der Kommunikationssitzung, eines ersten Satzes von Medienpaketen, die jeweils eine erste Anzahl von Medienrahmen beinhalten, wobei die erste Anzahl auf einem ersten Bündelungsfaktor bzw. BF (BF = bundling factor) basiert, der auf den ersten Satz von Medienpaketen angewandt wird;
Einstellen bzw. Festlegen einer De-Jitter- bzw. Schwankungspuffergröße der UE (200) auf ein erstes Level basierend auf dem ersten BF;
Empfangen, nach dem Festlegen der De-Jitter-Puffergröße der UE (200) auf einem ersten Level und während der Kommunikationssitzung, eines zweiten Satzes von Medienpaketen, die jeweils eine zweite Anzahl von Medienrahmen beinhalten, wobei die zweite Anzahl auf einem zweiten BF basiert, der auf den zweiten Satz von Medienpaketen angewandt wird; und
Überführen der De-Jitter-Puffergröße der ersten UE (200) auf ein zweites Level basierend auf dem zweiten BF.

24. Ein Verfahren zum Betreiben einer Nutzereinrichtung bzw. UE (UE = user equipment) (200), das Folgendes aufweist:
Bestimmen, dass eine Kommunikationssitzung veranlasst werden soll, die von einem Server (170) ausgehandelt bzw. vermittelt werden soll, und zwar mit wenigstens einer Ziel-UE (200);
Bestimmen, ob ein Zugriffsnetzwerk, das die UE (200) versorgt, Header-Komprimierung unterstützt;
Festlegen, basierend auf der Bestimmung der Header-Komprimierungsunterstützung, eines ersten Bündelungsfaktors bzw. BF (BF = bundling factor), der eine erste Anzahl von Medienrahmen pro Medienpaket anzeigt; und
Senden eines ersten Satzes von Medienpaketen, die jeweils eine ersten Anzahl von Medienrahmen beinhalten, an den Server (170) zur Sendung bzw. Übertragung an die wenigstens eine Ziel-UE (200) während der Kommunikationssitzung basierend auf dem ersten BF.

25. Ein Server (170) der konfiguriert ist zum Aushandeln einer Kommunikationssitzung zwischen einer Vielzahl von Nutzereinrichtungen bzw. UEs (UE = user equipment) (200), der Folgendes aufweist:
Mittel zum Bestimmen, für wenigstens eine Ziel-UE (200) aus der Vielzahl von UEs (200), wenigstens eines Zielbündelungsfaktors bzw. Ziel-BF (BF = bundling factor), der eine Zielanzahl von Medienframes bzw. Medienrahmen pro Medienpaket anzeigt, das an die wenigstens eine Ziel-UE (200) gesendet bzw. übertragen wird, wobei der Ziel-BF bestimmt wird basierend darauf, ob Header-Komprimierung in einem aktuellen, versorgenden Netzwerk der wenigstens einen Ziel-UE (200) oder in einem Subsatz des aktuellen, versorgenden Netzwerkes, mit dem die mindestens eine Ziel-UE (200) verbunden ist, unterstützt wird;
Mittel zum Empfangen, von einer sendenden bzw. übertragenden UE (200) aus der Vielzahl von UEs (200), während der Kommunikationssitzung, eines Satzes von Medienpaketen, die jeweils eine gegebene Anzahl von Medienrahmen für eine Sendung bzw. Übertragung an die wenigstens eine Ziel-UE (200) beinhalten, wobei die gegebene Anzahl auf einem gegebenen BF basiert, der auf den Satz von Medienpaketen angewandt wird;
Mittel zum Bestimmen, ob der gegebene BF modifiziert werden soll, der auf den Satz von Medienpaketen angewandt wird, basierend auf der wenigstens einen Ziel-BF; und
Mittel zum Senden bzw. Übertragen der Medienrahmen von dem Satz von Medienpaketen an die wenigstens eine Ziel-UE (200) basierend auf der Modifikationsbestimmung.

26. Eine Nutzereinrichtung bzw. UE (UE = user equipment) 200, die konfiguriert ist zum Teilnehmen an einer Kommunikationssitzung zwischen einer Vielzahl von UEs (200), die Folgendes aufweist:
Mittel zum Empfangen, während der Kommunikationssitzung, eines ersten Satzes von Medienpaketen, die jeweils eine erste Anzahl von Medienrahmen beinhalten, wobei die erste Anzahl auf einem ersten Bündelungsfaktor bzw. BF (BF = bundling factor) basiert, der auf den ersten Satz von Medienpaketen angewandt wird;
Mittel zum Einstellen bzw. Festlegen einer De-Jitter- bzw. Schwankungspuffergröße der UE (200) auf ein erstes Level basierend auf dem ersten BF;
Mittel zum Empfangen, nach dem Festlegen der De-Jitter-Puffergröße der UE (200) auf ein erstes Level und während der Kommunikationssitzung, eines zweiten Satzes von Medienpaketen, die jeweils eine zweite Anzahl von Medienrahmen beinhalten, wobei die zweite Anzahl auf einem zweiten BF basiert, der auf den zweiten Satz von Medienpaketen angewandt wird; und
Mittel zum Überführen der De-Jitter-Puffergröße der ersten UE (200) auf ein zweites Level basierend auf dem zweiten BF.

27. Nutzereinrichtung bzw. UE (200), die konfiguriert ist zum Teilnehmen an einer Kommunikationssitzung zwischen einer Vielzahl von UEs (200), die Folgendes aufweist:
Mittel zum Bestimmen, dass die Kommunikationssitzung veranlasst werden soll, die von einem Server (170) ausgehandelt bzw. vermittelt werden soll, und zwar mit wenigstens einer Ziel-UE (200);
Mittel zum Bestimmen, ob ein Zugriffsnetzwerk, das die UE (200) versorgt, Header-Komprimierung unterstützt;
Mittel zum Festlegen, basierend auf der Bestimmung der Header-Komprimierungsunterstützung, eines ersten Bündelungsfaktors bzw. BF (BF = bundling factor), der eine erste Anzahl von Medienrahmen pro Medienpaket anzeigt; und
Mittel zum Senden eines ersten Satzes von Medienpaketen, die jeweils die ersten Anzahl von Medienrahmen beinhalten, an den Server (170) zur Sendung bzw. Übertragung an die wenigstens eine Ziel-UE (200) während der Kommunikationssitzung basierend auf dem ersten BF.

28. Ein nicht transitorisches, computerlesbares Medium, das Instruktionen enthält, die darauf gespeichert sind, die, wenn sie von einem Server (170) ausgeführt werden, der konfiguriert ist, um eine Kommunikationssitzung zwischen einer Vielzahl von Nutzereinrichtungen bzw. UEs (UE = user equipment) (200) auszuhandeln bzw. zu vermitteln, den Server veranlassen, Vorgänge auszuführen, wobei die Instruktionen Folgendes aufweisen:
wenigstens eine Instruktion zum Bestimmen, für wenigstens eine Ziel-UE (200) aus der Vielzahl von UEs (200), wenigstens eines Zielbündelungsfaktors bzw. Ziel-BF (BF = bundling factor), der eine Zielanzahl von Medienframes bzw. Medienrahmen pro Medienpaket anzeigt, das an die wenigstens eine Ziel-UE (200) gesendet bzw. übertragen wird, wobei der Ziel-BF bestimmt wird basierend darauf, ob Header-Komprimierung in einem aktuellen, versorgenden Netzwerk der wenigstens einen Ziel-UE (200) oder in einem Subsatz des aktuellen, versorgenden Netzwerkes, mit dem die wenigstens eine Ziel-UE (200) verbunden ist, unterstützt wird;
wenigstens eine Instruktion zum Empfangen, von einer sendenden bzw. übertragenden UE (200) der Vielzahl von UEs (200), während der Kommunikationssitzung, eines Satzes von Medienpaketen, die jeweils eine gegebene Anzahl von Medienrahmen für eine Sendung bzw. Übertragung an die wenigstens eine Ziel-UE (200) beinhalten, wobei die gegebene Anzahl auf einem gegebenen BF basiert, der auf den Satz von Medienpaketen angewandt wird;
wenigstens eine Instruktion zum Bestimmen, ob der gegebene BF modifiziert werden soll, der auf den Satz von Medienpaketen angewandt wird, basierend auf der wenigstens einen Ziel-BF; und
wenigstens eine Instruktion zum Senden bzw. Übertragen der Medienrahmen von dem Satz von Medienpaketen an die wenigstens eine Ziel-UE (200) basierend auf der Modifikationsbestimmung.

29. Ein nicht transitorisches, computerlesbares Medium, das Instruktionen enthält, die darauf gespeichert sind, die, wenn sie von einer Nutzereinrichtung bzw. UE (UE = user equipment) (200) ausgeführt werden, die konfiguriert ist zum Teilnehmen an einer Kommunikationssitzung zwischen einer Vielzahl von UEs (200), die UE (200) veranlassen, Vorgänge durchzuführen, wobei die Instruktionen Folgendes aufweisen:
wenigstens eine Instruktion zum Empfangen, während der Kommunikationssitzung, eines ersten Satzes von Medienpaketen, die jeweils eine erste Anzahl von Medienrahmen beinhalten, wobei die erste Anzahl auf einem ersten Bündelungsfaktor bzw. BF (BF = bundling factor) basiert, der auf den ersten Satz von Medienpaketen angewandt wird;
wenigstens eine Instruktion zum Einstellen bzw. Festlegen einer De-Jitter- bzw. Schwankungspuffergröße der UE (200) auf ein erstes Level basierend auf dem ersten BF;
wenigstens eine Instruktion zum Empfangen, nach dem Festlegen der De-Jitter-Puffergröße der UE (200) auf ein erstes Level und während der Kommunikationssitzung, eines zweiten Satzes von Medienpaketen, die jeweils eine zweite Anzahl von Medienrahmen beinhalten, wobei die zweite Anzahl auf einem zweiten BF basiert, der auf den zweiten Satz von Medienpaketen angewandt wird; und
wenigstens eine Instruktion zum Überführen der De-Jitter-Puffergröße der ersten UE (200) auf ein zweites Level basierend auf dem zweiten BF.

30. Ein nicht transitorisches, computerlesbares Medium, das Instruktionen enthält, die darauf gespeichert sind, die, wenn sie von einer Nutzereinrichtung bzw. UE (UE = user equipment) (200) ausgeführt werden, die konfiguriert ist zum Teilnehmen an einer Kommunikationssitzung zwischen einer Vielzahl von UEs (200), die UE (200) veranlassen, Vorgänge durchzuführen, wobei die Instruktionen Folgendes aufweisen:
wenigstens eine Instruktion zum Bestimmen, dass die Kommunikationssitzung, die von einem Server (170) ausgehandelt werden soll, veranlasst werden soll, und zwar mit wenigstens einer Ziel-UE (200);
wenigstens eine Instruktion zum Bestimmen, ob ein Zugriffsnetzwerk, das die UE (200) versorgt, Header-Komprimierung unterstützt;
wenigstens eine Instruktion zum Festlegen, basierend auf der Bestimmung der Header-Komprimierungsunterstützung, eines ersten Bündelungsfaktors bzw. BF (BF = bundling factor), der eine erste Anzahl von Medienrahmen pro Medienpaket anzeigt; und
wenigstens eine Instruktion zum Senden eines ersten Satzes von Medienpaketen, die jeweils die erste Anzahl von Medienrahmen beinhalten, an den Server (170) zur Sendung bzw. Übertragung an die wenigstens eine Ziel-UE (200) während der Kommunikationssitzung basierend auf dem ersten BF.

## Revendications

1. Procédé d'exploitation d'un serveur (170) configuré pour arbitrer une session de communication entre une pluralité d'équipements d'utilisateur, EU, (200) comprenant les étapes consistant à :
déterminer, (630) pour au moins un EU cible (200) parmi la pluralité d'EU (200), au moins un facteur de groupement, BF indicatif d'un nombre cible de trames multimédia par paquet multimédia transmis à le au moins un EU cible (200),
dans lequel le BF cible est déterminé en fonction de si la compression d'entête est supportée au niveau d'un réseau de service actuel du au moins un EU cible (200) ou au niveau d'un sous-ensemble du réseau de service actuel à lequel le au moins un EU cible (200) est connecté ;
recevoir, à partir d'un EU émetteur (200) parmi la pluralité d'EU (200), au cours de la session de communication, un ensemble de paquets multimédia qui comprennent chacun un nombre donné de trames multimédia destinées à être transmises à l'au moins un EU cible, (200), le nombre donné étant basé sur un BF donné appliqué à l'ensemble de paquets multimédia ;
déterminer s'il faut modifier le BF donné appliqué à l'ensemble de paquets multimédia sur la base de l'au moins un EU cible ; et
transmettre les trames multimédia de l'ensemble de paquets multimédia vers le au moins un EU cible (200) sur la base de la détermination de modification.

2. Le procédé selon la revendication 1, dans lequel le au moins un BF cible comprend un BF cible commun qui est compatible avec une pluralité d'EU cibles (200) et est utilisé pour déterminer s'il faut modifier le BF donné pour chacun de la pluralité d'EU cibles (200).

3. Le procédé selon la revendication 2, dans lequel l'étape consistant à déterminer le au moins un BF cible comprend :
la détermination, pour chacun de la pluralité d'EU cibles (200), un BF le plus faible avec lequel est compatible l'EU cible (200) ; et
l'établissement du BF cible commun sur la base d'un BF le plus élevé des BF les plus faibles déterminés.

4. Le procédé selon la revendication 2, dans lequel le serveur (170) utilise une mémoire tampon commune afin de stocker temporairement des paquets pour livraison à la pluralité d'EU cibles (200) en correspondance avec le BF cible commun.

5. Le procédé selon la revendication 1, dans lequel l'étape consistant à déterminer le au moins un BF cible comprend :
la réception des informations en relation avec le BF à partir de l'un au moins un EU cible (200).

6. Le procédé selon la revendication 5, dans lequel les informations reçues en relation avec le BF comprennent
(i) une indication de l'au moins un BF cible,
(ii) une indication de si la compression d'en-tête est supportée au niveau d'un réseau de service actuel de le au moins un EU cible (200), et/ou
(iii) une indication de si la compression d'en-tête est supportée au niveau d'un sous-ensemble du réseau de service actuel à lequel est connecté le au moins un EU cible (200).

7. Le procédé selon la revendication 6, dans lequel l'indication de si la compression d'en-tête est supportée au niveau du réseau de service actuel correspond à une indication d'un type du réseau de service actuel.

8. Le procédé selon la revendication 7, dans lequel les informations reçues en relation avec le BF indiquent le fait que la compression d'en-tête est supportée en indiquant que le type de réseau de service actuel est le type Long Term Evolution, LTE, ou dans lequel les informations reçues en relation avec le BF indiquent le fait que la compression d'en-tête n'est pas supportée, en indiquant que le type de réseaux de service actuel et du type W-CDMA et/ou EV-DO.

9. Le procédé selon la revendication 6, dans lequel l'indication de si la compression d'en-tête est supportée au niveau du sous-ensemble du réseau de service actuel correspond à une indication de niveau de performance spécifique au sous-ensemble, du sous-ensemble du réseau de service actuel.

10. Le procédé selon la revendication 1, dans lequel l'étape consistant à déterminer au moins un BF cible comprend :
l'identification d'un premier BF qui est indicatif d'un nombre cible acceptable de trames multimédia par paquet multimédia transmis à un ou plusieurs EU (200) de l'au moins un EU cible (200) ; et
la diminution du premier BF sur la base d'un facteur de réglage afin de produire un deuxième BF,
dans lequel le deuxième BF correspond à l'au moins un BF cible pour le ou les plusieurs équipement(s) d'utilisateur (200).

11. Le procédé selon la revendication 9,
dans lequel le facteur de réglage règle un degré de réduction du premier BF,
dans lequel une réduction plus importante du premier BF améliore la latence de re-groupement pour les trames multimédia transmises et une réduction moins importante du premier BF améliore l'efficacité de mise en paquet pour la trame multimédia transmise, et
dans lequel le facteur de réglage est établi comme un compromis entre la latence de re-groupement et l'efficacité de mise en paquet.

12. Le procédé selon la revendication 1, dans lequel l'étape consistant à déterminer s'il faut modifier comprend :
la comparaison du BF donné avec au moins un nombre basé sur le au moins un BF cible, et
la détermination de modifier le BF donné si la comparaison indique que le BF donné n'est pas supérieur à l'au moins un nombre ; et
la détermination de ne pas modifier le BF donné si la comparaison indique que le BF donné est supérieur à l'un aux moins un nombre.

13. Le procédé selon la revendication 12, dans lequel le au moins un nombre correspond à le au moins un BF cible ou à au moins une version décalée de le au moins un BF cible.

14. Le procédé selon la revendication 1, dans lequel l'étape consistant à déterminer s'il faut modifier détermine qu'il faut modifier le BF donné, le procédé comprenant en outre :
le stockage temporaire en mémoire tampon de l'ensemble de paquets multimédia au niveau du serveur (170) ; et
la génération, sur la base de l'ensemble stocké temporairement en mémoire tampon de paquets multimédia d'un ensemble différent de paquets multimédia sur la base de le au moins un BF cible,
dans lequel l'étape de transmission transmet l'ensemble différent de paquets multimédia vers le au moins un EU cible (200).

15. Le procédé selon la revendication 1, dans lequel le au moins un EU cible (200) comprend un premier ensemble d'EU cibles (200) ainsi que un deuxième ensemble d'EU cibles (200), et
dans lequel l'étape consistant à déterminer au moins un BF cible détermine un premier BF cible pour le premier ensemble d'EU cibles (200)
et un deuxième BF cible pour le deuxième ensemble d'EU cibles (200).

16. Le procédé selon la revendication 15, dans lequel l'étape consistant à déterminer s'il faut modifier,
détermine de modifier le BF donné pour le premier ensemble d'EU cibles (200)
et détermine de ne pas modifier le BF donné pour le deuxième ensemble d'EU cibles (200).

17. Le procédé selon la revendication 15, dans lequel la détermination de s'il faut modifier comprend :
la comparaison du BF donné avec un premier nombre basé sur le premier BF cible et un deuxième nombre basé sur le deuxième BF cible, et
dans lequel l'étape consistant à déterminer s'il faut modifier comprend en outre :
la détermination de modifier le BF donné pour le premier ensemble d'EU cibles (200) si la comparaison indique que le BF donné n'est pas supérieur au premier nombre ;
la détermination de ne pas modifier le BF donné pour le premier ensemble d'EU cibles (200) si la comparaison indique que le BF donné est supérieur au premier nombre
la détermination de modifier le BF donné pour le deuxième ensemble d'EU cibles (200) si la comparaison indique que le BF donné n'est pas supérieur au deuxième nombre ; et
la détermination de ne pas modifier le BF donné pour le deuxième ensemble d'EU cibles (200) dans le cas où la comparaison indique que le BF donné est supérieur au premier nombre.

18. Le procédé selon la revendication 17, dans lequel le premier et le deuxième nombre correspondent respectivement au premier et deuxième BF cibles, ou respectivement à une première et une deuxième version décalée du premier et deuxième BF cibles.

19. Le procédé selon la revendication 1, comprenant en outre :
la réception, à partir de l'EU (200) émetteur, un autre ensemble de paquets multimédia qui comprennent chacun un autre nombre donné de trames multimédia pour transmission vers le au moins un EU cible (200), l'autre nombre donné étant basé sur un autre BF donné appliqué à l'autre ensemble de paquets multimédia,
dans lequel on répète l'étape consistant à déterminer s'il faut modifier et l'étape de transmission sur la base de l'autre BF donné.

20. Le procédé selon la revendication 19, dans lequel l'étape consistant à recevoir un autre ensemble de paquets multimédia se réalise sur la base d'une transition de l'EU (200) émetteur
(i) vers un autre réseau de service qui présente un niveau différent de support de compression d'en-tête et/ou de performance, ou (ii) vers une partie différente de ce même réseau de service présentant un niveau différent de support de compression d'en-tête et/ou de performance.

21. Le procédé selon la revendication 1, comprenant en outre :
la détermination d'un autre au moins un BF cible pour le au moins un EU cible (200) ; et
la répétition de l'étape consistant à recevoir, l'étape consistant à déterminer s'il faut modifier, et l'étape consistant à transmettre sur la base de l'autre au moins un BF cible déterminé.

22. Le procédé selon la revendication 21, dans lequel la détermination d'un autre au moins un BF cible est basée sur une transition de l'au moins un EU cible (200)
(i) vers un réseau de service différent ayant un niveau différent de support de compression d'en-tête et/ou de performance, ou
(ii) vers une partie différente du même réseau de service ayant un niveau différent de support de compression d'en-tête et/ou de performance.

23. Un procédé d'exploitation d'un équipement d'utilisateur, EU (200) participant dans une session de communication entre une pluralité d'EU (200) comprenant les étapes consistant à :
recevoir, pendant la session de communication, un premier ensemble de paquets multimédia qui comprennent chacun un premier nombre de trames multimédia, le premier nombre étant basé sur un premier facteur de groupage, BF appliqué au premier ensemble de paquets multimédia ;
fixer une taille de mémoire tampon de correction de gigue de l'EU (200) à un premier niveau basé sur le premier BF ;
recevoir, après avoir fixé la taille de la mémoire tampon de correction de gigue de l'EU (200) au premier niveau et au cours de la session de communication, un deuxième ensemble de paquets multimédia qui comprennent chacun un deuxième nombre de trames multimédia, le deuxième nombre étant basé sur un deuxième BF appliqué au deuxième ensemble de paquets multimédia ; et
faire une transition de la taille de la mémoire tampon de correction de gigue de l'EU (200) vers un deuxième niveau basé sur le deuxième BF.

24. Procédé d'exploitation d'un équipement d'utilisateur, EU, (200) comprenant les étapes consistant à :
déterminer de commencer une session de communication destinée à être arbitrée par un serveur, avec au moins un EU cible (200) ;
déterminer si un réseau d'accès qui dessert l'EU (200) supporte la compression d'en-tête ;
établir, sur la base de la détermination de support de compression d'en-tête, un premier facteur de groupage, BF, indicatif d'un premier nombre de trames multimédia par paquet multimédia ; et
transmettre un premier ensemble de paquets multimédia qui comprennent chacun le premier nombre de trames multimédia vers le serveur (170) pour transmission à l'au moins un EU cible (200) pendant la session de communication sur la base du premier BF.

25. Un serveur (170) configuré pour arbitrer une session de communication entre une pluralité d'équipements d'utilisateur, EU, (200) comprenant :
des moyens pour déterminer, pour au moins un EU cible (200) parmi la pluralité d'EU (200) au moins un facteur de groupage cible, BF indicatif d'un nombre cible de trames multimédia par paquet multimédia transmis vers le au moins un EU cible (200), dans lequel le BF cible est déterminé sur la base de si la compression d'en-tête est supportée au niveau d'un réseau de service actuel de l'au moins un EU cible (200) ou au niveau d'un sous-ensemble du réseau de service actuel à lequel est connecté le au moins un EU cible (200) ;
des moyens pour recevoir, à partir d'un EU émetteur (200) parmi la pluralité d'EU (200) au cours de la session de communication, un ensemble de paquets multimédia qui comprennent chacun un nombre donné de trames multimédia pour transmission à l'au moins un EU cible (200), le nombre donné étant basé sur un BF donné appliqué à l'ensemble de paquets multimédia ;
des moyens pour déterminer s'il faut modifier le BF donné appliqué à l'ensemble de paquets multimédia sur la base de l'au moins un BF cible, et
des moyens pour transmettre les trames multimédia de l'ensemble de paquets multimédia vers le au moins un EU cible (200) sur la base de la détermination de modification.

26. Un équipement d'utilisateur, EU (200) configuré pour participer dans une session de communication entre une pluralité d'EU (200) comprenant :
des moyens pour recevoir, pendant la session de communication, un premier ensemble de paquets multimédia qui comprennent chacun un premier nombre de trames multimédia, le premier nombre étant basé sur un premier facteur de groupage, BF appliqué au premier ensemble de paquets multimédia;
des moyens pour fixer la taille de la mémoire tampon de correction de gigue de l'EU (200) à un premier niveau sur la base du premier BF ;
des moyens pour recevoir, après avoir fixé la taille de la mémoire tampon de correction de gigue de l'EU (200) au premier niveau et au cours de la session de communication, un deuxième ensemble de paquets multimédia qui comprennent, chacun, un deuxième nombre de trames multimédia, le deuxième nombre étant basé sur un deuxième facteur du groupage appliqué au deuxième ensemble de paquets multimédia ; et
des moyens pour faire une transition de la taille de la mémoire tampon de correction de gigue de l'EU (200) vers un deuxième niveau sur la base du deuxième BF.

27. Un équipement d'utilisateur, EU (200) configuré pour participer dans une session de communication entre une pluralité d'EU (200) comprenant :
des moyens pour déterminer de commencer la session de communication destinée à être arbitrée par un serveur (170) avec au moins un EU cible (200) ;
des moyens pour déterminer si un réseau d'accès desservant l'EU (200) support la compression d'en-tête ;
des moyens pour établir, sur la base de la détermination du support de compression d'en-tête, un premier facteur de groupage, BF indicatif d'un premier nombre de trames multimédia par paquet multimédia ; et
des moyens pour transmettre un premier ensemble de paquets multimédia qui comprennent chacun le premier nombre de trames multimédia vers le serveur (170) pour transmission vers le au moins un EU cible (200) pendant la session de communication basée sur le premier BF.

28. Un support non transitoire lisible par ordinateur contenant des instructions stockées sur celui-ci qui, lors de leur exécution par un serveur (170) configuré pour arbitrer une session de communication entre une pluralité d'équipement d'utilisateur, EU, (200) provoque la réalisation d'actions par le serveur, les instructions comprenant :
au moins une instruction pour déterminer, pour au moins un EU cible (200) parmi la pluralité d'EU (200) au moins un facteur de groupage cible, BF indicatif du nombre cible de trames multimédia par paquet multimédia transmis vers le au moins un EU cible (200), dans lequel le BF cible est déterminé sur le base de si la compression d'en-tête est supportée au niveau d'un réseau de service actuel de le au moins un EU (200) ou au niveau d'un sous-ensemble du réseau de service actuel à lequel est connecté le au moins un EU cible (200),
au moins une instruction pour recevoir, à partir d'un EU émetteur (200) parmi la pluralité d'EU (200) pendant la session de communication, un ensemble de paquets multimédia qui comprennent chacun un nombre donné de trames multimédia pour transmission à l'au moins un EU cible (200), le nombre donné étant basé sur un BF donné appliqué à l'ensemble de paquets multimédia ;
au moins une instruction pour déterminer s'il faut modifier le BF donné appliqué à l'ensemble de paquets multimédia sur la base de l'au moins un BF cible ; et
au moins une instruction pour transmettre les trames multimédia de l'ensemble des paquets multimédia vers le au moins un EU cible (200) sur la base de la détermination de modification.

29. Un support non transitoire lisible par ordinateur contenant des instructions stockées sur celui-ci, qui, lors de leur exécution par un équipement d'utilisateur, EU (200) configuré pour participer dans une session de communication entre une pluralité d'EU (200), provoque la réalisation d'actions par l'EU (200), les instructions comprenant :
au moins une instruction pour recevoir, pendant la session de communication, un premier ensemble de paquets multimédia qui comprennent chacun un premier nombre de trames multimédia, le premier nombre étant basé sur un premier facteur de groupage, BF appliqué au premier ensemble de paquets multimédia ;
au moins une instruction pour fixer une taille de mémoire tampon de correction de gigue de l'EU (200) à un premier niveau sur la base du premier BF ;
au moins une instruction pour recevoir, après avoir fixé la taille de la mémoire tampon de correction de gigue de l'EU (200) au premier niveau et pendant la session de communication, un deuxième ensemble de paquets multimédia qui comprennent chacun un deuxième nombre de trames multimédia, le deuxième nombre étant basé sur un deuxième BF appliqué au deuxième ensemble de paquets multimédia ; et
au moins une instruction de faire une transition de la taille de la mémoire tampon de correction de gigue de l'EU (200) vers un deuxième niveau basé sur le deuxième BF.

30. Un support non transitoire lisible par ordinateur contenant des instructions stockées sur celui-ci, qui, lors de leur exécution par un équipement d'utilisateur, EU (200) configuré pour participer dans une session de communication entre une pluralité d'EU (200) provoque la réalisation d'actions par l'EU (200), les instructions comprenant :
au moins une instruction pour déterminer de commencer une session de communication destinée à être arbitrée par un serveur (170) avec au moins un EU (200) ;
au moins une instruction pour déterminer si un réseau d'accès desservant l'EU (200) support la compression d'en-tête ;
au moins une instruction pour établir, sur la base de la détermination de support de compression d'en-tête, un premier facteur de groupage, BF indicatif d'un premier nombre de trames multimédia par paquet multimédia ; et
au moins une instruction de transmettre un premier ensemble de paquets multimédia qui comprennent chacun le premier nombre de trames multimédia vers le serveur (170) pour transmission vers le au moins un EU cible (200) pendant la session de communication sur la base du premier BF.
